# EUROPÄISCHE PATENTSCHRIFT

(11) **EP 0 712 352 B1**
(45) Veröffentlichungstag und Bekanntmachung des Hinweises auf die Patenterteilung: **08.10.1997**
(21) Anmeldenummer: 94924301.8
(22) Anmeldetag: 29.07.1994
(51) Int. Cl.: B29C 53/68, B29C 53/48, B29C 53/38, F16L 55/165

(54) **VERFAHREN ZUM HERSTELLEN EINES ROHRFÖRMIGEN AUSKLEIDUNGSSCHLAUCHES**
PROCESS FOR MAKING A TUBULAR CLADDING HOSE
PROCEDE DE FABRICATION D'UNE GAINE DE CHEMISAGE TUBULAIRE

(30) Priorität: 06.08.1993 DE 4326503; 22.11.1993 DE 4339756
(43) Veröffentlichungstag der Anmeldung: 22.05.1996
(73) Patentinhaber: Brandenburger Patentverwertungsgesellschaft des bürgerlichen Rechts, 82467 Garmisch-Partenkirchen (DE)
(72) Erfinder: BRANDENBURGER, Joachim, D-82457 Garmisch-Partenkirchen (DE)
(74) Vertreter: Grünecker, Kinkeldey, Stockmair & Schwanhäusser Anwaltssozietät
(86) Internationale Anmeldenummer: EP9402521
(87) Internationale Veröffentlichungsnummer: WO9504646

(56) Entgegenhaltungen:
- EP-A- 0 292 703
- EP-A- 0 347 364
- WO-A-90/11175
- WO-A-91/14896
- BE-A- 536 720
- FR-A- 2 683 889
- GB-A- 2 002 485
- GB-A- 2 104 615
- US-A- 2 256 263
- US-A- 2 491 152
- US-A- 3 855 031
- US-A- 3 915 618
- PATENT ABSTRACTS OF JAPAN vol. 8 no. 140 (M-305) (1577) ,29.Juni 1984 & JP,A,59 038045 (TIGERS POLYMER K.K.) 26.August 1982,

## Beschreibung

Die Erfindung bezieht sich auf ein Verfahren zum Herstellen eines rohrförmigen Auskleidungsschlauches zum Einsatz bei Kanalsanierungsarbeiten, bei dem mindestens ein Faserband zu einem aushärtbaren, harzgetränkten Schlauch geformt wird, wobei die Innenseite des so entstandenen Auskleidungsschlauches mit einem Folienschlauch versehen wird, auf den das Faserband abgewickelt wird. Des weiteren bezieht sich die Erfindung auf eine Vorrichtung zur Durchführung des erfindungsgemäßen Verfahrens.

Ein solches Verfahren und die dazu verwendete Vorrichtung ist aus der WO-A-9011175 bekannt. Dort wird ein niedrig dichtes Kernmaterial von einer Rolle abgerollt, wobei um das Kernmaterial eine ebenfalls von einer Rolle abgewickelte Kunststoffolie herumgelegt und an der Längsnaht verschweißt wird. Anschließend wird eine relativ dicke Schicht aus einen lichtaushärtbaren transparenten Polyesterharz mit eingelagerten Fasern mittels eines Extruders um den Folienschlauch extrudiert. In einer Wickelstation wird dann dieser Aufbau mit einer Lage vorimprägnierter Faserbänder bewickelt, die anschließend von einer Folienlage abgedeckt werden. Nachfolgend kann ein zweiter Wickelvorgang mit vorimprägnierten Faserbändern in entgegengesetzter Richtung erfolgen, die dann abschließend von einer äußeren Hüllage umgeben werden, welche aus einem vorimprägnierten Material mit einem äußeren Kunststoffilm bestehen kann.

In der DE-OS 3922351 ist ein während des Warm-Aushärtungsvorganes auf einer, einen Heizmantel umgebenden Schutzfolie aufsitzendes Wickelrohr beschrieben, bei dem sich die Wickelenden des Faserbandes und damit auch die Überlappungskante spiralig über die Länge des Wickelrohres erstrecken. Solche Auskleidungsschläuche werden bevorzugt in defekte Abflußrohre eingezogen, wo sie dann mittels eines Aufweiterungsvorganges mit der Innenfläche des beschädigten Abflußrohres zur Anlage gebracht werden. Die Aufweitung des Auskleidungsschlauches kann durch Aufbringen eines Innendrucks mit Luft oder Wasser erreicht werden. Hierbei gleiten dann die überlappenden Bereiche aufeinander ab. Nachdem der Auskleidungsschlauch im Abflußrohr aufgeweitet worden ist, wird der harzgetränkte Auskleidungsschlauch ausgehärtet. Die Aushärtungsart richtet sich nach dem verwendeten Harz. Bewährt haben sich vor allem UV-aushärtende Harze und warmaushärtende Harze.

Es ist die Aufgabe der vorliegenden Erfindung, ein Verfahren zum Herstellen eines rohrförmigen Auskleidungsschlauches der eingangs genannten Art bereitzustellen, bei dem beliebig lange Schlauchlängen und variable Schlauchdurchmesser einfach herzustellen sind.

Diese Aufgabe wird erfindungsgemäß durch ein Verfahren gemäß Anspruch 1 gelöst. Dadurch, daß der Folienschlauch, wie durch das erfindungsgemäße Verfahren vorgeschlagen, in beliebiger Länge und variablen Durchmessern hergestellt werden kann, können Auskleidungsschläuche für Abflußrohre beliebiger Abmaße ohne großen Umrüst- und Arbeitsaufwand gegebenenfalls auch vor Ort erzeugt werden. Der Vollständigkeit halber sei an dieser Stelle noch erwähnt, daß unabhängig von der Ausführungsform, der durch dieses Verfahren hergestellte Auskleidungsschlauch auch ohne Inanlagebringen mit einem Abflußrohr aufgeweitet und ausgehärtet werden kann, wobei er dann ersatzweise als Rohrleitung, z.B. Wasserleitung, Pipeline oder Abflußrohr, verwendbar ist.

Bevorzugt wird weiterhin, wenn der Auskleidungsschlauch einen äußeren Folienschlauch aufweist, der verhindert, daß eventuell schädliche Bestandteile des Harzes durch Leckstellen im Abflußrohr in die Umwelt austreten können. Hierzu kann auf das zu einem Schlauch geformten Faserband ein äußerer Folienschlauch durch schraubenförmiges Umwickeln mit einem zweiten Folienband aufgebracht werden, wobei die sich einanderzugeordneten Seitenkanten des zweiten Folienbandes bevorzugt überlappen.

Insbesondere kann der Auskleidungsschlauch mit relativ hoher Geschwindigkeit hergestellt werden, wenn der Wickelvorgang des Faserbandes und des Folienbandes bzw. der Folienbänder im wesentlichen gleichzeitig ausgeführt wird.

Günstigerweise sind die sich einander überlappenden Seitenkanten des ersten oder zweiten Folienbandes, bevorzugt durch Verschweißen oder Verkleben, abgedichtet miteinander verbunden. Hierdurch können eventuell schädliche Bestandteile des Harzes nicht in die Umwelt gelangen.

Die Dichtheit und die Unempfindlichkeit, z.B. gegenüber dem Einziehen in einen Kanalabschnitt, kann bei einer Ausführungsform nochmals gesteigert werden, indem die sich einander überlappenden Seitenkanten des ersten und/oder zweiten Folienbandes, bevorzugt durch Verschweißen oder Verkleben, abgedichtet miteinander verbunden werden.

Besonders einfach können die Ränder des inneren und/oder äußeren Folienschlauches durch ein mitlaufendes Klebeband miteinander verbunden werden. Das Klebeband kann dann wahlweise auf der Innen- oder Außenseite der Folienschläuche angebracht werden. Diese Verfahrensweise hat sich als besonders preisgünstig herausgestellt, weil auf aufwendigere Verschweiß- und Klebstoffmittelzuführeinrichtungen verzichtet werden kann.

Bei einer weiteren Ausführungsform kann das Faserband bzw. die Faserbänder schraubenförmig um den Folienschlauch in eine Schlauchform gewickelt werden, wobei sich die einander zugewandten Seitenkanten der Faserbänder überlappen. Der gewickelte Aufbau hat den Vorteil, daß durch die Wickelsteigung die Stärke des Auskleidungsschlauches, bestimmt werden kann.

Um zu verhindern, daß Nahtstelle über Nahtstelle gewickelt wird, ist es von Vorteil, wenn das Faserband oder die Faserbänder mit gegengerichteter Steigung zu der Steigung des ersten oder zweiten Folienbandes gewickelt wird. Ein günstiger Aufbau des Schlauches kann dadurch erreicht werden, daß mindestens zwei Faserbänder kreuzweise zueinander gewickelt werden.

In einer weiteren bevorzugten Ausführungsform können die Faserbänder mit ihrer Längskante im wesentlichen in Schlauchlängsrichtung ausgerichtet auf die schlauchförmige Schutzfolie abgewickelt und von Führungseinrichtungen zu einer Schlauchform um die Schutzfolie herumgeführt werden, wobei die Nähte und/oder Überlappungen zweier Längskanten eines Faserbandes oder zweier Faserbänder von einem darüber angeordneten Faserband abgedeckt werden. Hierdurch kann mittels eines relativ geringen apparativen Aufwandes ein Auskleidungsschlauch von beliebiger Länge und Wandstärke hergestellt werden. Dabei garantiert das Abdecken der Nähte und/oder Überlappungen durch ein darüberangeordnetes Faserband, daß eine hohe Stabilität und Reißfestigkeit des Auskleidungsschlauches gewahrt ist. Es sei hier erwähnt, daß es auch im Sinne der Erfindung ist, wenn die Nähte und/oder Überlappungen der äußersten Lage nicht mehr abgedeckt werden. Durch diese Verfahrensweise läßt sich nicht nur der Arbeitsaufwand weiterhin verringern, sondern der Auskleidungsschlauch kann auch mit höherer Geschwindigkeit hergestellt werden.

Um eine besonders hohe Festigkeit des Auskleidungsschlauches zu erreichen, werden die Faserbänder so versetzt zueinander abgewickelt, daß die Nähte und/oder Überlappungen der Längskanten gleichmäßig versetzt zueinander am Umfang angeordnet werden. Hierdurch ist immer eine gute und stabile Abdeckung der Nähte und/oder Überlappungen hergestellt.

Bei einer weiteren bevorzugten Verfahrensform wird die Schutzfolie zu einem inneren Folienschlauch geformt und der Folienschlauch flachgedrückt, wobei die übereinanderliegenden seitlich zueinander versetzten Faserbänder mit der Führungseinrichtung an den Folienschlauch gemeinsam herangeführt und um diesen gemeinsam herumgelegt werden, so daß die stufenförmig zueinander angeordneten Längskanten der einen Seite paßgenau mit den stufenförmig zueinander angeordneten Längskanten der anderen Seite zusammengefügt werden. Diese Verfahrensweise ermöglicht, eine Vorrichtung einzusetzen, die einen besonders geringen Platzbedarf aufweist. Das eigentliche Herumführen der Faserbänder um den Folienschlauch übernehmen bei dieser Verfahrensweise die Führungseinrichtungen.

Das Faserband wird bei einer weiteren Verfahrensvariante mit Harz, bevorzugt durch Walzenauftrag, getränkt, bevor es zu dem Schlauch geformt wird. Bislang war es allgemein üblich, die Faserbänder in ihrer Schlauchform abzuwickeln und diesen Schlauch anschließend in einem gesonderten Vorgang mit Harz zu tränken. Durch den erfindungsgemäßen Vorschlag läßt sich dieser Beharzungsvorgang wesentlich vereinfachen und zeitlich vorverlagern. Ein im Vergleich zu den einzelnen Faserbändern relativ dicker Auskleidungsschlauch läßt sich viel schwieriger und zeitaufwendiger Durchharzen als ein einzelnes Faserband. Zudem ist bei der bekannten Technik nicht sichergestellt, ob ein gleichmäßiges und vollständiges Durchharzen erfolgt ist.

Als besonders günstig hat sich herausgestellt, wenn in den inneren Folienschlauch Luft eingeblasen wird, so daß das Faserband auf den aufgeblasenen Teil des Folienschlauches gewickelt wird. Hierdurch kann der Schlauch nicht versehentlich auf dem Wickeldorn festgeklemmt werden.

Des weiteren kann der fertig gewickelte Auskleidungsschlauch von einer Abnahmevorrichtung abgeführt und aufgerollt werden. Dieser Abnahmevorgang kann entsprechend der jeweils vorhandenen Wickelgeschwindigkeit längs des Wickeldorns so bemessen sein, daß im Prinzip unendlich lange Schlauchstücke kontinuierlich hergestellt werden können. Es besteht in diesem Zusammenhang auch die Möglichkeit, daß die Abnahmevorrichtung den fertiggewickelten Auskleidungsschlauch sofort zur Verarbeitung in einem beschädigten Abflußrohr weiterleitet.

Aus Fertigungsgründen haben sich insbesondere als Faserband ein Glasfaser-Rovinggewebe, -Gelege, und/oder -Gewirke, und/oder Glasfaser-Matten und/oder -Vliese allein oder in Kombination untereinander herausgestellt. Insbesondere in Verbindung mit den in Auskleidungsschläuchen verwendeten Harzen wird durch diese Materialkombination eine extrem hohe Festigkeit erreicht.

Weiterhin ist es insbesondere im Zusammenhang mit lichtaushärtbaren Harzen günstig, wenn auf die Außenseite des Schlauches eine nach innen und/oder außen im wesentlichen vollständig reflektierende Schicht aufgebracht wird. Eine äußere lichtundurchlässige Schicht verhindert ein vorzeitiges Aushärten des lichtaushärtbaren Harzes, wodurch der Schlauch länger lagerungsfähig ist und an der Herstellungsstätte und Verarbeitungsstätte keine aufwendigen Abdeckungen nötig sind. Eine nach innen reflektierende Schicht verkürzt die Aushärtdauer des Harzes durch die dadurch erzielbare höhere Lichtintensität.

Des weiteren wird für eine Vorrichtung, gemäß Anspruch 19, zur Durchführung des Verfahrens nach einem der Ansprüche 1 bis 18 Schutz begehrt.

Diese Vorrichtung umfaßt einen länglichen Wickeldorn und mindestens zwei im Abstand drehbar um die Wickeldornachse angeordnete Aufnahmeeinrichtungen zur Aufnahme von Faser- bzw. Folienbandrollen, wobei die Faserbandrollen jeweils um ihre Längsachse drehbar in der jeweiligen Aufnahmeeinrichtung derart gehaltert sind, daß die Faserbänder durch eine Drehbewegung der Aufnahmeeinrichtung um die Wickeldornachse und gleichzeitiger Drehung der Faserbandrolle um die eigene Achse auf den Wickeldorn bzw. um die Wickeldornachse wickelbar sind, und wobei eine Abnahmevorrichtung den gewickelten Auskleidungsschlauch von dem Wickeldorn im wesentlichen in Achsrichtung des Wickeldorns abführt. Der Wickeldorn ist aus mindestens zwei im wesentlichen parallel zueinander angeordneten Wickelfingern gebildet, die einzeln oder gemeinsam radial zur Wickeldornachse zum Verändern des Wickelumfangs des Wickeldorn verstellbar sind. Durch eine solche Ausführungsform lassen sich stufenlos einstellbar jeweils gewünschte Schlauchdurchmesser erzeugen. Bevorzugt sind hierbei jeweils die Wickelfinger zylindrisch ausgebildet. Auf diesem Aufbau kann darüber hinaus auf relativ kleinem Raum ein Auskleidungsschlauch beliebiger Länge und Festigkeit hergestellt werden. Solch eine Vorrichtung kann weiterhin mit einer relativ hohen Geschwindigkeit betrieben werden, weshalb auch große Schlauchlängen in rentablen Zeitspannen herstellbar sind.

Günstig ist es, wenn die Aufnahmeeinrichtungen jeweils eine winkelverstellbare Aufnahmeachse zur drehbaren Aufnahme der Faser- bzw. Folienbandrollen aufweisen, wobei die Wickelsteigung des Faser- bzw. Folienbandes im wesentlichen von der Winkelstellung von der jeweiligen Aufnahmeachse abhängig ist. Durch diese Ausgestaltung wird weiterhin begünstigt, daß die Seitenkanten der Bänder jeweils sauber übereinander liegen.

Vorteilhaft ist es weiterhin, wenn die Aufnahmeeinrichtungen jeweils ein um den Wickeldorn angeordnetes, reifenförmiges Gestell aufweisen, das drehbar um den Wickeldorn gelagert ist, wobei die Gestelle von einer Antriebseinheit jeweils mit unterschiedlichen Drehzahlen derart antreibbar sind, daß bei unterschiedlicher Wickelsteigung von Faser- bzw. Folienbändern die Abwickelgeschwindigkeit in Achsrichtung des Wickeldorns bei allen Faser- bzw. Folienbändern gleich ist.

In einer weiteren günstigen Ausführungsform weist der Wickeldorn an seinem Abnahmeende ein Blasmundstück auf, durch das Luft in den Folienschlauch einblasbar ist. Durch die Luft wird das Abziehen des Folienschlauches vom Wickeldorn erheblich erleichtert. Weiterhin kann die Luft auch als Vortrieb zum Abführen des Folienschlauches verwendet werden.

Bevorzugt wird auch, wenn die Abnahmeeinrichtung den Auskleidungsschlauch zusammendrückende Abnahmewalzen aufweist, wobei der Folienschlauch zwischen den Abnahmewalzen und dem Blasmundstück einen mit Luft gefüllten Bereich aufweist. Des weiteren kann dann die Aufnahmeeinrichtung für die Folienbandrolle zum Wickeln des Folienschlauches um den Wickeldorn angeordnet und die Aufnahmeeinrichtung für die Faserbandrolle bzw. für die Folienbandrolle zum Wickeln eines äußeren Folienschlauches im wesentlichen um das Blasmundstück und/oder um den mit Luft gefüllten Bereich des inneren Folienschlauches angeordnet sein. Durch das Abwickeln des Faserbandes und des äußeren Folienschlauches auf einem Luftpolster ist der Verfahrensablauf sehr störungsunanfällig, weil sich der immer dicker werdende Schlauch nicht auf dem Wickeldorn verklemmen kann.

Günstig ist es auch, wenn jeweils der Aufnahmeeinrichtung für das Folienband eine Versiegelungseinrichtung zum Abdichten, bevorzugt durch Verschweißen oder Verkleben, der einander überlappenden Seitenkanten des Folienbandes zugeordnet ist.

Wenn die Wickelfinger gemeinsam drehbar um die Wickeldornachse gelagert und/oder angetrieben sind, kann der Wickelvorgang auch durch eine Drehbewegung des Wickeldorns erfolgen. Weiterhin ist es unter anderem dabei günstig, wenn die Wickelfinger jeweils um ihre Achse drehbar gelagert und/oder drehbar angetrieben sind.

Damit das Abziehen des Schlauches vom Wickeldorn in axialer Richtung relativ reibungsfrei und ohne Verlagerung der einzelnen Wickellagen zueinander erfolgen kann, sind in einer weiteren Ausführungsform die Wickelfinger mit einer Einrichtung, z.B. einem Riementrieb zum Erzeugen einer zur Abzugsgeschwindigkeit des Schlauches synchronen Vorschubbewegung in Richtung der Schlauchlängserstreckung versehen, damit das erwähnte, im wesentlichen reibungsfreie Abziehen des inneren Folienschlauches von den Wickelfingern erfolgen kann.

Bei einer anderen Vorrichtung sind mindestens zwei Aufnahmeeinrichtungen zur drehbaren Aufnahme von Faser- bzw. Folienbandrollen in einer im wesentlichen senkrecht zur Schlauchachse ausgerichteten Aufnahmeebene angeordnet, wobei mehrere Aufnahmeebenen mit Aufnahmeeinrichtungen axial zur Schlauchachse versetzt zueinander vorgesehen sind und wobei die Aufnahmeeinrichtungen eine Aufnahmeebene mindestens zu den Aufnahmeeinrichtungen einer anderen Ebene um die Schlauchachse verdreht angeordnet sind, so daß in Schlauchachse gesehen, im wesentlichen eine sternförmige Anordnung der Aufnahmeeinrichtung gebildet ist. Durch das Aufbringen der Faserbänder in verschiedenen Ebenen ist es möglich, daß in einer Ebene im wesentlichen beliebig viele Folienbandrollen zur Erzeugung des Gesamtumfangs der jeweiligen Schlauchschicht angeordnet sein können. Je schmaler dabei die Faserbänder sind, desto weniger Führungsarbeit muß von den Führungseinrichtungen übernommen werden. Hierbei ist jedoch abzuwägen, welche Naht- und/oder Überlappungsanzahl am günstigsten ist. Die Dicke des Auskleidungsschlauches wird bei dieser Vorrichtung durch die Anzahl der Aufnahmeebenen und die Stärke der Faserbänder bestimmt. Während bei den meisten Vorrichtungen noch die Wickelsteigung und Wickelgeschwindigkeit einen großen Einfluß auf die Produktionsgeschwindigkeit des Auskleidungsschlauches haben, hängt die Produktionsgeschwindigkeit für den Auskleidungsschlauch gemäß dieser Vorrichtung lediglich von der Abrollgeschwindigkeit der Faserbänder bzw. Folienbänder von den Aufnahmeeinrichtungen ab.

Bevorzugterweise ist jedem Faserband eine Führungseinrichtung in Form mindestens einer Andrückrolle zugeordnet, die für eine formgenaue Anlage des Faserbandes an den inneren Folienschlauch vorgesehen ist. Durch das entsprechende Anordnen von Andrückrollen an jedes Faserband wird eine große Formgenauigkeit des fertigen Auskleidungsschlauches erreicht.

Eine weitere Vorrichtung weist mehrere Aufnahmeeinrichtungen zur drehbaren Aufnahme von Faser- bzw. Folienbandrollen auf, die in Reihe hintereinander und seitlich versetzt zueinander angeordnet sind, so daß mindestens die Faserbänder übereinanderliegend, mit stufenförmig versetzten Längskanten abgerollt werden, wobei eine Führungseinrichtung bevorzugt in Form mehrerer Andrückrollen, vorgesehen ist, die die Faserbänder um den Folienschlauch herumlegen. Diese Vorrichtung weist einen kompaken Aufbau auf, da die Aufnahmeeinrichtungen lediglich hintereinander und nicht um den gesamten Umfang des Folienschlauches herum angeordnet sind. Auch bei dieser Vorrichtung wird die Produktionsgeschwindigkeit des Auskleidungsschlauches von der Abwickelgeschwindigkeit der einzelnen Folien- oder Faserbänder bestimmt. Den Führungseinrichtungen muß bei dieser Vorrichtung mehr Bedeutung zugemessen werden, da sie letztendlich für das Herumführen des gestuften Faserbandstapels um den Folienschlauch zuständig sind.

Bei einer besonderen Ausführungsform der obigen Vorrichtungen kann ein Walzenpaar zum Andrücken eines oberen und unteren Folienbandes vorgesehen sein, durch das der Schlauch hindurchgeführt ist, wobei die flache Breite des Folienschlauches geringer ist als die Breite der Folienbänder, so daß die seitlich überstehenden Ränder der Folienbänder durch eine dem Walzenpaar zugeordnete Verbindungseinrichtung miteinander, bevorzugt durch Verschweißen oder Kleben, verbindbar sind. Durch das Verschweißen zweier Folienbänder an ihren Rändern kann auf sehr elegante und einfache Weise ein innerer und/oder äußerer Folienschlauch entsprechender Größe hergestellt werden. Des weiteren kann bei einer bevorzugten Ausführungsform der Vorrichtungen eine flache Führungszunge vorgesehen sein, deren Umfangslänge im wesentlichen der Breite des inneren Folienbandes entspricht, so daß das Folienband durch eine Führungseinrichtung bevorzugt in Form von Andrückrollen, um die Führungszunge herumführbar ist, so daß die Folienränder im wesentlichen paßgenau aneinanderliegen und mit einer Verbindungseinrichtung miteinander, bevorzugt durch Schweißen oder Kleben, verbindbar sind. Eine solche Führungszunge gewährleistet, daß auch bei einem nicht aufgeblasenen, inneren Folienschlauch eine form- und größengenaue Herstellung des Auskleidungsschlauches erfolgt.

Als vorteilhaft hat sich weiterhin herausgestellt, wenn die Führungszunge mit einer Einrichtung zum Erzeugen einer im wesentlichen zur Abzugsgeschwindigkeit des Schlauches synchronen Vorschubbewegung in Richtung der Schlauchlängserstreckung versehen ist, damit ein im wesentlichen reibungsfreies Abziehen des inneren Folienschlauches von der Führungszunge erfolgen kann.

Um eine besonders kostengünstige und einfache Verbindungsmethode durchführen zu können, kann eine weitere Ausführungsform der Vorrichtungen als Verbindungseinrichtung eine Achse mit drehbar aufgesteckter Klebebandrolle aufweisen, wobei das Klebeband so aufgerollt wird, daß die einander zugeordneten Ränder des Folienbandes auf die Klebeseite des Klebebandes durch die Führungseinrichtung im wesentlichen paßgenau aufdrückbar sind.

Der Auskleidungsschlauch besteht aus einem schraubenförmig aus einem Folienband gewickelten Folienschlauch um mindestens einem auf den Folienschlauch abgewickelten, harzgetränkten Faserband, wobei sich die einander zugewandten Seitenkanten des Folienbandes überlappen und die einander zugeordneten Seitenkanten des Faserbandes überlappen. Es sein an dieser Stelle nochmals erwähnt, daß, unabhängig von der Ausführungsform und dem Herstellverfahren, der Auskleidungsschlauch auch ohne Inanlagebringen mit einem Abflußrohr aufgeweitet und ausgehärtet werden kann, wobei er dann ersatzweise als Rohrleitung, z.B. Wasserleitung, Pipeline oder Abflußrohr, verwendbar ist.

Ein solcher Auskleidungsschlauch weist die bereits oben beschriebenen Vorteile auf.

Bevorzugt ist auf die zu einem Schlauch geformten Faserbänder ein aus einem zweiten Folienband hergestellter Folienschlauch angeordnet. Günstigerweise sind hierbei die Längsränder des inneren und/oder äußeren Folienbandes jeweils, bevorzugt durch Schweißen oder Verkleben abgedichtet miteinander verbunden.

Bei einer bevorzugten Ausführungsform ist das Faserband schraubenförmig um den Folienschlauch in eine Schlauchform gewickelt. Weiterhin kann das Faserband eine gegengerichtete Wickelsteigung zur Wickelsteigung des ersten und/oder zweiten Folienbandes aufweisen. Möglich ist auch ein kreuzweises Wickeln von mindestens zwei Faserbändern.

Bei einer weiteren bevorzugten Ausführungsform besteht der Auskleidungsschlauch aus mehreren, auf einem inneren Folienschlauch mit ihren Längskanten im wesentlichen in Schlauchlängsrichtung angeordneten, harzgetränkten Faserbändern, wobei die Nähte und/oder Überlappungen zweier Längskanten eines Faserbandes oder zweier Faserbänder von einem darüber angeordneten Faserband abgedeckt sind. Längsnähte und/oder Überlappungen, wie sie bei den Auskleidungsschläuchen gemäß der vorliegenden Erfindung vorkommen, erscheinen dem Fachmann auf dem ersten Blick weniger stabil als gewickelte Auskleidungsschläuche. Jedoch durch das Überdecken der Nähte und/oder Überlappungen durch ein jeweils darüber angeordnetes Faserband wird eine Stabilität erreicht, die sich mit der gewickelten Ausführung durchaus messen kann. Von Vorteil ist es darüber hinaus, wenn die Faserbänder so versetzt zueinander angeordnet sind, daß die Nähte und/oder Überlappungen der Längskanten gleichmäßig versetzt zueinander am ganzen Umfang angeordnet sind. Hierdurch wird nochmals eine Stabilitätssteigerung erreicht, da nicht in einem Bereich des Auskleidungsschlauches vermehrt Nähte und/oder Überlappungen auftreten.

Das Faserband besteht bevorzugt aus einem Glasfaser-Rovinggewebe, -Gelege, und/oder -Gewirke, und/oder Glasfaser-Matten und/oder -Vliese, allein oder in Kombination untereinander. Diese Materialien bringen die entsprechende notwendige Festigkeit für Auskleidungsschläuche mit.

Ein insbesondere einfaches Aushärten des Auskleidungsschlauches kann dadurch erfolgen, daß das Faserband mit einem UV-härtbarem Harz, das vorzugsweise im sichtbaren und ungefährlichen UV-A-Bereich mit und ohne zusätzliche radikalische Initiatoren aushärtbar ist, getränkt ist.

Bei einer weiteren Ausführungsform kann auf die Außenseite des Schlauches eine nach innen und/oder außen im wesentlichen vollständig lichtreflektierende Schicht aufgebracht sein. Hieraus ergeben sich die oben bereits beschriebenen Vorteile bezüglich der Lagerung, Lichtabschirmung bei der Herstellung und Verarbeitung und des Aushärtens. Bevorzugt wird die lichtreflektierende Schicht von einer Aluminiumschicht gebildet, wodurch bei sehr gutem Wirkungsgrad lediglich geringe Kosten anfallen. Die Verwendung einer Aluminiumfolie ist in diesem Zusammenhang denkbar. Bevorzugterweise ist die lichtreflektierende Schicht durch eine aluminiumbedampfte Außenfolie, bevorzugt eine Kunststoffolie gebildet. Zu diesem Zweck kann auch der äußere Folienschlauch verwendet werden. Hierbei ist es bezüglich des erfinderischen Gedankens unerheblich, ob die Aluminiumbedampfung auf der Außen- oder Innenseite der Folie erfolgt.

Bei einer weiteren Ausführungsform kann die Außen- und/oder Innenfolie mit einer verstärkenden Schicht, z.B. einer Gewebeschicht, versehen sein, um ein Einreißen der entsprechenden Folie auch bei der Herstellung von langen Schlauchlängen zu verhindern.

An dieser Stelle sei angemerkt, daß der hier beschriebene Auskleidungsschlauch in aller Regel ein Vorprodukt ist, welches z.B. durch ein nachträgliches Einzugsverfahren in einen Kanalabschnitt eingezogen und dort ausgehärtet werden kann.

Ein weiteres Verfahren dient ebenfalls zum Herstellen eines rohrförmigen Auskleidungsschlauches, insbesondere zum Einsatz bei Kanalsanierungsarbeiten. Bei diesem wird mindestens ein Faserband zu einem aushärtbaren, harzgetränkten Schlauch geformt, wobei die Innenseite des so entstandenen Auskleidungsschlauches mit einer Schutzfolie versehen wird. Das Verfahren zeichnet sich dadurch aus, daß das Faserband auf einen Wickeldorn aus einem die Schutzfolie bildenden stabilisierten Folienschlauch abgewickelt wird. Durch einen solchen stabilisierten Folienschlauch lassen sich die Vorrichtungskosten durch das hier beschriebene Verfahren erheblich senken, da der Folienschlauch selbst den Wickeldorn bildet. Hervorzuheben ist hier besonders die Ausführungsform, bei der der Folienschlauch aufgeblasen wird und das Faserband auf den aufgeblasenen Folienschlauch abgewickelt wird. Bedeutsam an diesem Verfahren ist vor allem, daß auch nicht gewickelte Folienschläuche als aufgeblasener Wickelkern dienen können.

Hierbei ist es von Vorteil, wenn der aufgeblasene Folienschlauch auf einem innen im Folienschlauch angeordneten Gegenhalter im wesentlichen exzentrisch geführt ist. Hierdurch kommt das Faserband an dieser Stelle jeweils sauber zur Anlage.

Es ist günstig, wenn der Folienschlauch aus mindestens einem Folienband hergestellt wird, welches in Schlauchlängsrichtung von einer Rolle abgezogen und gleichzeitig zu einer Röhre geformt wird, wobei die Längsränder des Folienbandes oder der Folienbänder miteinander verschweißt oder verklebt werden. Das hat zum Vorteil, daß sich zum einen die Schweißnaht auf herkömmliche Weise herstellen läßt, und daß sich zum anderen die Schlauchdurchmesser einfach variieren lassen, indem die Folienrolle auf einem Rollenschneider auf Herstellungsbreite konfektioniert wird. Bei der Verwendung von zwei Folienbändern brauchen diese zur Bildung des Folienschlauches aufeinandergelegt und an ihren Rändern miteinander verbunden werden.

Im folgenden werden Ausführungsbeispiele der vorliegenden Erfindung anhand einer Zeichnung näher erläutert. Es zeigt:
- Fig. 1: eine schematische Darstellung einer Vorrichtung zum Wickeln eines Auskleidungsschlauches,
- Fig. 2: eine schematische Seitenansicht einer Vorrichtung zum Wickeln eines Auskleidungsschlauches,
- Fig. 3: eine schematische Seitenansicht einer erfindungsgemäßen Vorrichtung,
- Fig. 4: eine schematische Draufsicht der Ausführungsform aus Fig. 3,
- Fig. 5: einen aus einer ersten Variante von Wickelfingern gebildeten Wickeldorn,
- Fig. 6: eine zweite Variante von Wickelfingern in einer teilweise geschnittenen Vorderansicht,
- Fig. 7: den Wickelfinger aus Fig. 6 in einer Draufsicht,
- Fig. 8: den Wickelfinger aus Fig. 7 in einer Seitenansicht,
- Fig. 9: eine geschnittene Teilansicht des Wickelfingers aus Fig. 6 entlang der Linie IX-IX geschnitten,
- Fig. 10: eine schematische Seitenansicht einer weiteren Vorrichtung zum Wickeln eines Auskleidungsschlauches,
- Fig. 11: eine vergrößerte Seitenansicht von Fig. 10 entlang der Linie XI-XI geschnitten,
- Fig. 12: eine weitere Vorrichtung zum Wickeln eines Auskleidungsschlauches in einer perspektivischen, schematischen Darstellung,
- Fig. 13: eine vergrößerte Querschnittsdarstellung entlang der Linie XIII-XIII aus Fig. 12 geschnitten,
- Fig. 14: eine vergrößerte Querschnittsdarstellung entlang der Linie XIV-XIV aus Fig. 12 geschnitten,
- Fig. 15: eine weitere Ausführungsform einer Wickelschichtung gemäß der vorliegenden Erfindung in einer schematischen Darstellung und
- Fig. 16: eine schematische Darstellung einer Folienschlauchwicklung gemäß einer Ausführungsform der Erfindung.

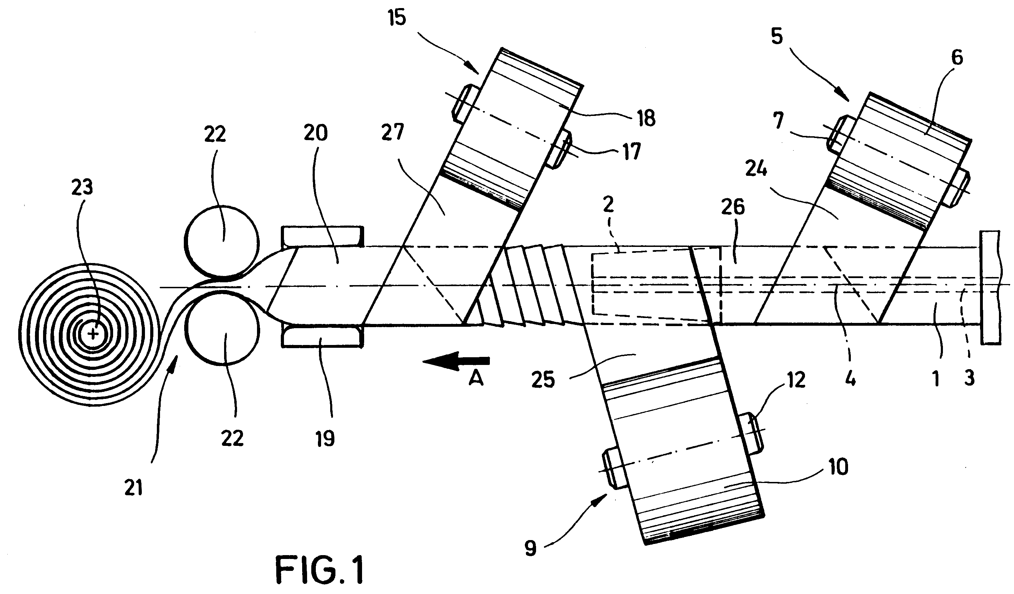

In Fig. 1 ist eine Ausführungsform einer Wickelvorrichtung zum Wickeln eines Auskleidungsschlauches dargestellt. Die Wickelvorrichtung umfaßt einen länglichen, im wesentlichen zylindrischen Wickeldorn 1, der an einem Ende ein im wesentlichen kegelstumpfförmiges Blasmundstück 2 aufweist. Das Blasmundstück 2 ist mit einer sich durch den Wickeldorn 1 erstreckenden Zuluftleitung 3 versehen, die an dem dem Blasmundstück 2 abgewandten Ende mit einer nicht dargestellten Druckluftversorgungseinheit verbunden ist.

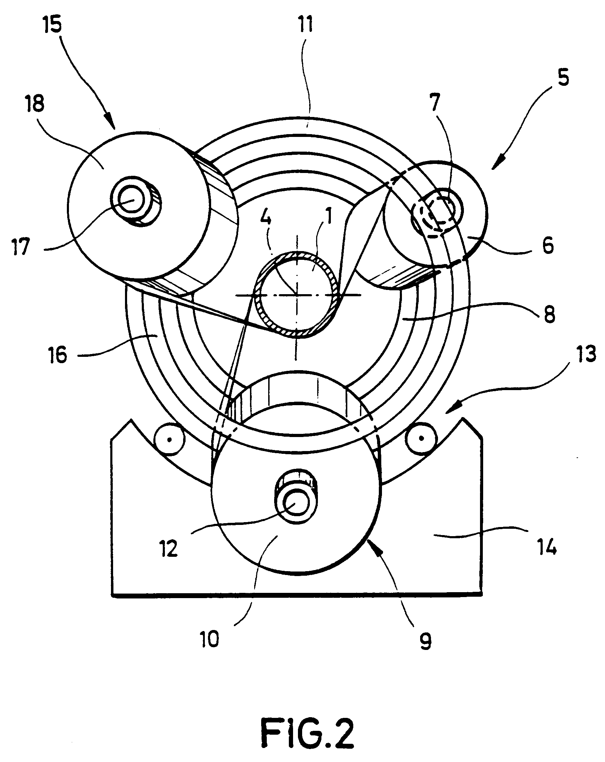

Im Abstand um den Wickeldorn 1 ist drehbar um die Wickeldornachse 4 eine schematisch dargestellte, erste Aufnahmeeinrichtung 5 zur Aufnahme einer ersten Folienbandrolle 6 angeordnet. Die erste Aufnahmeeinrichtung 5 umfaßt eine winkelverstellbare Aufnahmeachse 7 und ein um den Wickeldorn 1 drehbar angeordnetes, reifenförmiges Gestell 8 (siehe Fig. 2). Das Gestell 8 kann von einer nicht dargestellten Antriebseinheit um die Wickeldornachse 4 gedreht werden. Dabei rotiert ebenfalls die Aufnahmeachse 7 um die Wickeldornachse 4.

Im Bereich des Blasmundstücks 2 ist um die Wickeldornachse 4 drehbar eine zweite Aufnahmeeinrichtung 9 zur Aufnahme einer Faserbandrolle 10 angeordnet. Die zweite Aufnahmeeinrichtung 9 umfaßt ebenfalls ein um den Wickeldorn 1 drehbar angeordnetes, reifenförmiges Gestell 11, an dem eine winkelverstellbare Aufnahmeachse 12 angeordnet ist, auf der die Faserbandrolle 10 drehbar gehaltert ist.

In Fig. 2 ist ein schematisch dargestellter Antriebsmechanismus 13 gezeigt, der auf einem Sockel 14 angeordnet ist. Der Antriebsmechanismus 13 treibt das Gestell 11 mittels Reibschluß an seinem Außenumfang an.
In Achsrichtung vor dem Blasmundstück 2 des Wickeldorns 1 ist eine dritte Aufnahmeeinrichtung 15 drehbar um die Wickeldornachse 4 angeordnet. Die dritte Aufnahmeeinrichtung 15 umfaßt ebenfalls ein drehbar um die Wickeldornachse 4 gelagertes, reifenförmiges Gestell 16, an dem eine winkelverstellbare Aufnahmeachse 17 angebracht ist, auf der eine zweite Folienbandrolle 18 drehbar gehaltert ist.

Die dritte Aufnahmeeinrichtung 15 ist zwischen dem Blasmundstück 2 und einem axial zur Wickeldornachse 4 angeordneten Führungsring 19 angeordnet. Der Innendurchmesser des Führungsrings 19 entspricht ungefähr dem Außendurchmesser eines fertig gewickelten Auskleidungsschlauches 20. Auf der dem Wickeldorn 1 abgewandten Seite des Führungsrings 19 ist eine Abnahmevorrichtung 21 angeordnet, die ein Paar den Auskleidungsschlauch 20 zusammendrückende Abnahmewalzen 22, sowie eine Aufwickelhaspel 23 zum Aufwickeln des von den Abnahmewalzen 22 flach gedrückten Auskleidungsschlauch 20 umfaßt.

Im folgenden wird eine Ausführungsvariante eines Verfahrens zum Wickeln eines Auskleidungsschlauches anhand der Zeichnungen näher erläutert.

Ein erstes Folienband 24 wird von der Folienbandrolle 6 auf dem Wickeldorn 1 angebracht und auf diesem durch Drehbewegungen der ersten Aufnanmeeinrichtung 5 schraubenförmig aufgewickelt. Es muß erst einmal eine bestimmte Folienschlauchlänge vorgegeben werden, damit eine Vorschubbewegung durch die Abnahmevorrichtung 21 und die Druckluft aus dem Blasmundstück 2 erfolgen kann. Günstigerweise werden die sich überlappenden Seitenkanten des Folienbandes 24 abdichtend miteinander verbunden. Bevorzugt kann diese Verbindung durch Kleben oder Verschweißen der Folienränder miteinander geschehen. Der Übersichtlichkeit halber ist in den Figuren keine Vorrichtung zur Verbindung der überlappenden Seitenkanten dargestellt. Die Aufnahmeachse 7, um die die erste Folienbandrolle 6 drehbar angeordnet ist, ist winkelverstellbar an dem Gestell 8 angebracht. Die gewünschte Steigung und die Breite der Überlappung der Seitenkanten des ersten Folienbandes 24 kann somit bestimmt werden. Dadurch, daß die Abnahmewalzen 22 den Folienschlauch 26 zusammendrücken, kann durch das Blasmundstück 2 Druckluft in diesen hineingepumpt werden. Der Folienschlauch 26 bläht sich dadurch auf, weshalb er leichter zu handhaben und von dem Wickeldorn 1 abzuführen ist.

Im Bereich des Blasmundstücks 2 wird nun durch die zweite Aufnahmeeinrichtung 9 ein harzgetränktes Faserband 25 auf den inneren Folienschlauch 26 schraubenförmig aufgewickelt. Hierbei dreht sich das Gestell 11 um die Wickeldornachse 4, wodurch die Faserbandrolle 10 sich um die Aufnahmeachse 12 abrollt. Wie insbesondere in Fig. 1 zu sehen ist, wird das Faserband 25 mit einer gegengerichteten Steigung zur Steigung des ersten Folienbandes 24 gewickelt. Hierdurch wird die Möglichkeit, das undichte Stellen auftreten könnten, weitgehendst vermieden. Weiterhin wird das Faserband 25 mit einer geringeren Steigung als das erste Folienband 24 gewickelt. Die Steigung des Faserbandes 25 hängt im wesentlichen von der gewünschten Wandstärke und somit Festigkeit des Auskleidungsschlauches 20 ab. Damit die Vorschubbewegung in Richtung A mit konstanter Geschwindigkeit erfolgen kann, muß das Faserband 25 in dem in Fig. 1 dargestellten Fall schneller um die Wickeldornachse 4 gewickelt werden als das erste Folienband 24. Hierzu rotiert das Gestell 11 der zweiten Aufnahmeeinrichtung 9 mit entsprechend abgestimmter Drehzahl zur Drehzahl des Gestells 8. Der Antrieb der Aufnahmeeinrichtungen 5 und 9 kann hierzu separat oder durch einen Kopplungs- und Übersetzungsmechanismus gemeinsam erfolgen. Dieser sollte jedoch stufenlos arbeiten, da auch die Winkelstellung der Aufnahmeachse 7 und 12 stufenlos einstellbar ist. Als besonders günstig hat sich herausgestellt, wenn das Faserband 25, wie in Fig. 1 zu sehen, im Bereich des aufgeblasenen Folienschlauches 26 gewickelt wird. Der aufgeblasene Schlauch 26 dient quasi als Mittelkern. Das Faserband 25 kann entweder vorab auf einer separaten Anlage mit Harz getränkt worden sein. Es ist jedoch auch möglich, daß der zweiten Aufnahmeeinrichtung 9 eine nicht dargestellte Auftragseinheit zugeordnet ist, die Auftragswalzen umfaßt, deren Anpreßdruck zum Verändern des Harzgehaltes einstellbar ist. Dies hat den Vorteil, daß jeweils nur soviel Faserband 25 mit Harz getränkt wird, wie zur Verarbeitung benötigt wird.

Auf das gewickelte harzgetränkte Faserband 25 wird nachfolgend noch ein zweites Folienband 27 aufgewickelt, dessen Steigung ebenfalls der Steigung des Faserbandes 25 entgegengerichtet ist. Zusätzlich ist die Steigung des zweiten Folienbandes 27 größer als die des Faserbandes 25, wodurch die dritte Aufnahmeeinrichtung 15 mit kleinerer Geschwindigkeit und entgegengesetzter Drehrichtung dreht als die Geschwindigkeit und Drehrichtung der zweiten Aufnahmeeinrichtung 9. Die sich überlappenden Seitenkanten des Folienbandes 27 können auch hier in einem weiteren Schritt mittels einer nicht-dargestellten Vorrichtung abdichtend miteinander verbunden werden. Der dann fertig gewickelte Auskleidungsschlauch 20, dessen innerer Folienschlauch 26 immer noch aufgeblasen ist, wird nunmehr an seiner Außenfläche durch den Führungsring 19 geführt. Hierdurch wird erreicht, daß der Auskleidungsschlauch 20 im wesentlichen auch im nicht abgestützten Bereich zwischen Führungsring 19 und Wickeldorn 1 um die Wickeldornachse 4 gewickelt wird. Das Verfahren bietet insbesondere den Vorteil, daß die einzelnen Wickelvorgänge des Faserbandes 25 und der Folienbänder 24, 27 gleichzeitig durchgeführt werden können.

Anschließend wird der fertige Auskleidungsschlauch 20 von den Abnahmewalzen 22 erfaßt und zusammengedrückt. Hierdurch läßt sich der Auskleidungsschlauch 20 in bekannter Weise auf einer Aufwickelhaspel 23 für die spätere Weiterverarbeitung aufwickeln. Denkbar wäre auch eine direkte Einführung des so hergestellten Auskleidungsschlauches 20 in den zu sanierenden Abwasserkanal.
Der so hergestellte Auskleidungsschlauch 20 kann dann in bekannter Weise in einem zu sanierenden Abwasserkanal eingeführt werden und anschließend durch Druckluft oder Wasserdruck seine endgültige Form erlangen. Der durch das zweite Folienband 27 erzeugte äußere Folienschlauch liegt dann an der Innenwandung des Abwasserkanals an. Anschließend erfolgt die Aushärtung des harzgetränkten Faserbandes entsprechend den Bedingungen des verwendeten Harzes. Bekanntgeworden sind insbesondere UV-aushärtende Harze, bei denen dann UV-Licht aussendende Strahler in das Innere des Auskleidungsschlauches 20 eingebracht werden. Als besonders stabiles Material für das Faserband 25 hat sich ein Glasroving-Gewebe herausgestellt. Auf die Außenseite des Schlauches kann noch eine lichtreflektierende Schicht, z.B. in Form einer aluminiumbedampften Kunststoffolie, aufgebracht werden. Die Kunststoffolie kann auch die Folie für den äußeren Folienschlauch darstellen.

Ein Auskleidungsschlauch 20 der nach diesem Verfahren hergestellt wird, kann vor Ort in gewünschter Stärke und Länge hergestellt und anschließend sofort verarbeitet werden. Insbesondere das Voraberzeugen eines inneren Folienschlauches, der in mühevoller Arbeit für den Wickelvorgang vorbereitet werden muß, kann durch das Verfahren entfallen.

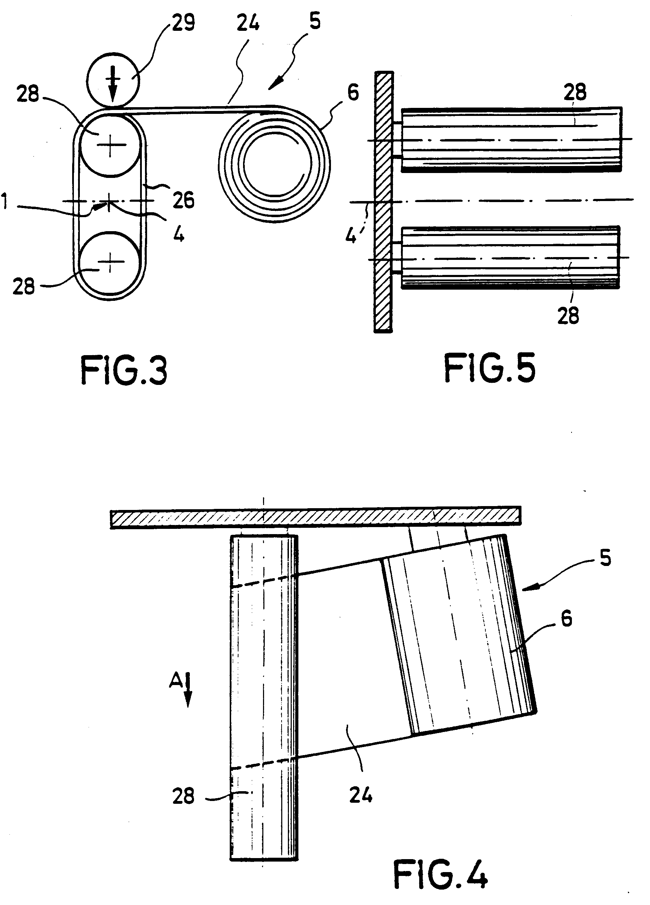

In diesem Zusammenhang sollte noch erwähnt werden, daß es auch denkbar wäre, anstatt die Folienbandrollen 6 und 18, sowie die Faserbandrolle 10 um die Wickeldornachse 4 rotieren zu lassen, den Wickeldorn bzw. den Folienschlauch zu drehen, wodurch die Aufnahmeeinrichtung 5, 9 und 15 stillstehen könnten. Werden bei einem solchen Verfahren gegengerichtet Wickelsteigungen gewünscht, müssen die einzelnen Bänder 24, 25 und 27 entsprechend an den Wickeldorn 1 bzw. den inneren Folienschlauch 26 herangeführt werden. Die in Fig. 1 dargestellte Anlenkung wäre für einen solchen Vorgang nicht geeignet.
Im folgenden wird anhand der Figuren 3 bis 5 auf eine Ausführungsform der Vorrichtung zur Durchführung des erfindungsgemäßen Verfahrens eingegangen. Für gleiche und ähnliche Bauteile im Vergleich zur oben erwähnten Vorrichtung werden die gleichen Bezugszeichen verwendet.

Der Wickeldorn 1 besteht bei dieser Vorrichtung aus zwei parallel zueinander angeordneten, zylindrischen Wickelfingern 28. Die Wickelfinger 28 sind ebenfalls parallel zur Wickeldornachse 4 angeordnet und radial zu dieser verstellbar. Hierdurch läßt sich der effektive Wickelumfang des Wickeldorns 1 vergrößern, wodurch stufenlos unterschiedliche Schlauchdurchmesser erzeugt werden können. Entweder können die Wickelfinger 28, deren Anzahl beliebig sein kann, um die Wickeldornachse drehen, wodurch ein Folienband 24 von der Folienbandrolle 6 auf den Wickeldorn 1 abgewickelt wird. Der so gewickelte Folienschlauch 26 wird dann in Richtung A abgeführt. Möglich ist aber auch weiterhin die Drehbewegung der einzelnen Aufnahmeeinrichtungen 5, 9 und 15 um die Wickeldornachse 4 bei stillstehendem Wickeldorn 1. Gegebenenfalls können weiterhin die Wickelfinger 28 um ihre eigene Achse drehbar und/oder drehbar antreibbar sein. Wie aus der ersten Ausführungsform bekannt, ist die Folienbandrolle 6 im Winkel verstellbar zur Wickeldornachse angeordnet. An dieser Stelle sei erwähnt, daß aus Vereinfachungsgründen lediglich die Folienbandrolle 6 und keine weiteren Bandrollen dargestellt sind. Das Folienband 24 wird von einer Andrückrolle 29 erfaßt und auf einen der Wickelfinder 28 gedrückt. Hierdurch wird das Folienband 24 geführt und straff gezogen. Nachfolgend können dann das Faserband 25 und das zweite Folienband 27 wie gewohnt schraubenförmig auf den inneren Folienschlauch 26 aufgewickelt werden.

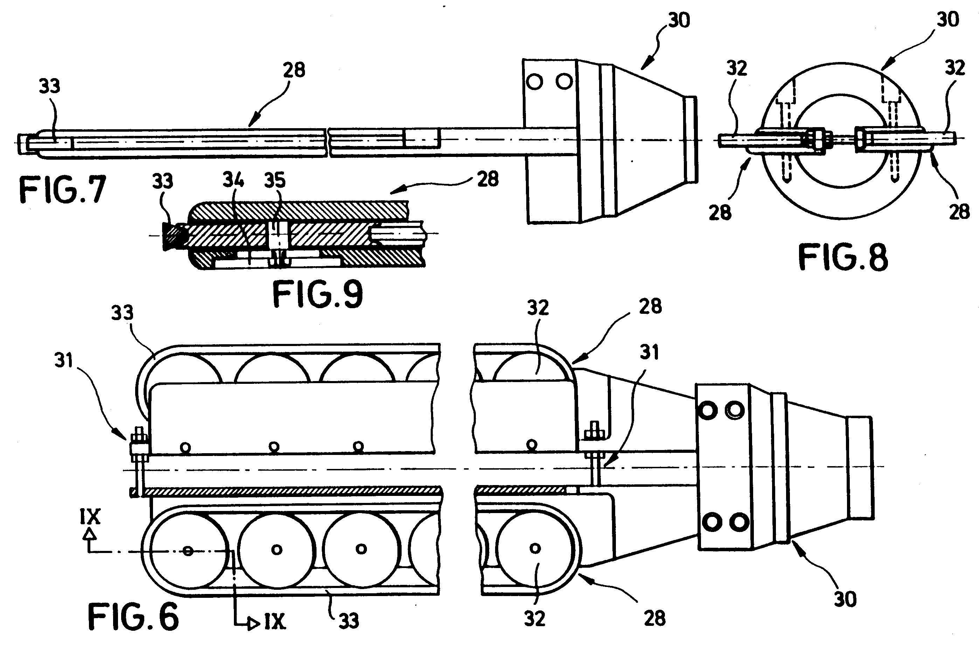

Im folgenden wird auf eine zweite Variante der Wickelfinger 28 unter Zuhilfenahme der Figuren 6 bis 9 Bezug genommen. Die dort dargestellten, im wesentlichen flachen Wickelfinger 28 sind an einer gemeinsamen Aufnahme 30 einseitig angeordnet. Die Aufnahme 30 wird von einer entsprechenden, nicht dargestellten Abstützvorrichtung aufgenommen. Die beiden Wickelfinger 28 sind im wesentlichen parallel zueinander ausgerichtet und durch Einstellelemente 31, die in der Zeichnung in Form von Schrauben dargestellt sind, zueinander einjustierbar. Gleichzeitig können die an der Aufnahme 30 befestigten Enden der Wickelfinger 28 in der Aufnahme 30 verschoben werden. Die Besonderheit dieser Wickelfinger 28 besteht darin, daß diese eine Einrichtung zum Bereitstellen einer Vorschubbewegung darstellen. Gemäß dieser Varianten erfolgt dies durch in den Wickelfingern 28 integrierte Riemenscheiben 32, auf denen ein einem Wickelfinger 28 zugeordneter Riemen 33 im wesentlichen stramm aufsitzt. Die Riemenscheiben 32 eines Wickelfingers 28 sind jeweils einseitig durch Öffnungen 34 in den Seitenwänden der Wickelfinger 28 zugängig, so daß deren Befestigungs- bzw. Justierbolzen 35 gelöst bzw. verstellt werden können. Als Riemen 33 wird bevorzugt ein Keilriemen verwendet. Die Riemenscheiben 32 sind dann entsprechend ausgestaltet. Es besteht die Möglichkeit, den Riemen über einen separaten, insbesondere zur Antriebsgeschwindigkeit der Aufnahme 30 synchronen Antrieb anzutreiben oder durch die Leichtgängigkeit des Riemenantriebs einen im wesentlichen reibungsfreien Abzug in Abnahmerichtung A zu bewirken. Wenn die Vorschubgeschwindigkeit durch den Riementrieb der Wickelfinger 28 der Abnahmegeschwindigkeit A entspricht, wird der Folienschlauch 26 im wesentlichen reibungs- und somit knitterfrei von den Wickelfingern 28 abgezogen. Aber selbst eine leichtgängige Riemenanordnung stellt schon einen erheblichen Vorteil bezüglich des Abnehmens des Folienschlauchs 26 von den Wickelfingern 28 dar. Aufgrund der Verstellmöglichkeit durch die Einstellelemente 31 können innerhalb der durch die Abmessungen der Wickelfinger 28 vorgegebenen Grenzen sämtliche Schlauchdurchmesser hergestellt werden.

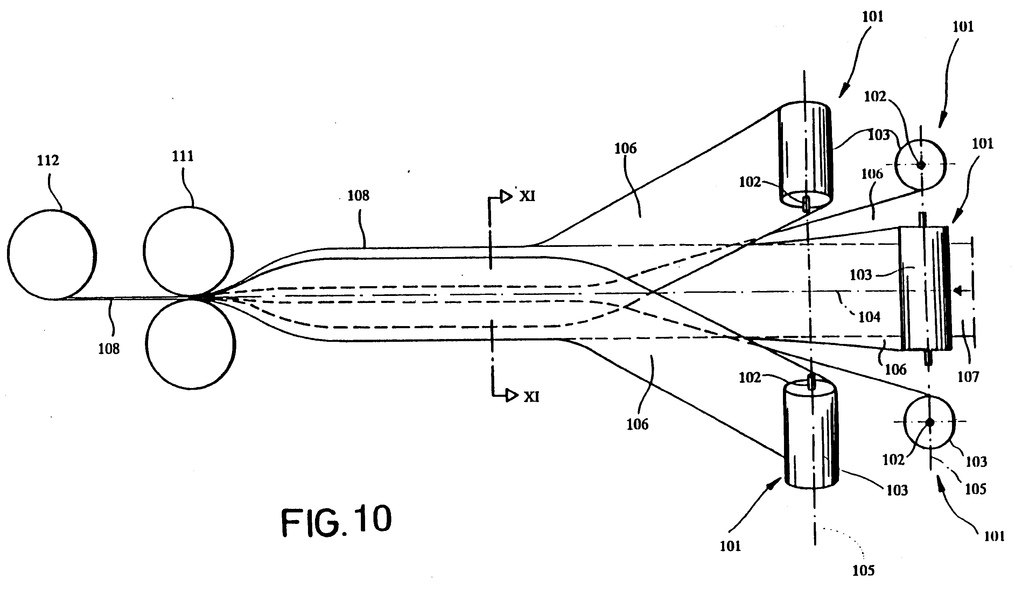

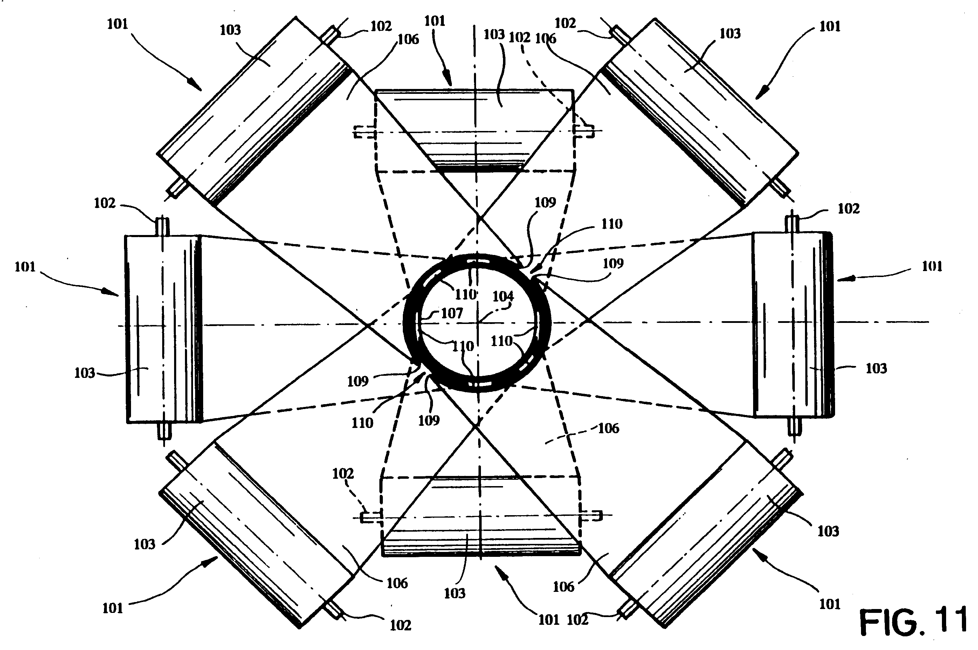

Im folgenden wird eine weitere Ausführungsform einer Vorrichtung zum Wickeln eines Auskleidungsschlauches anhand der Figuren 10 und 11 näher beschrieben.
Die in Fig. 10 und 11 dargestellte Vorrichtung umfaßt mehrere schematisch dargestellte Aufnahmeeinrichtungen 101, die jeweils eine Aufnahmeachse 102 zur drehbaren Aufnahme von Faserbandrollen 103 umfassen. Die Aufnahmeeinrichtungen 101 sind jeweils in einer senkrecht zu einer im wesentlichen senkrecht zur Schlauchachse 104 ausgerichteten Aufnahmeebene 105 angeordnet. Die Fig. 10 zeigt zwei Aufnahmeebenen 105, die axial zur Schlauchachse 104 versetzt zueinander vorgesehen sind. Wie insbesondere aus Fig. 11 zu sehen ist, sind die Aufnahmeeinrichtungen 101 zweier Aufnahmeebenen 105 um die Schlauchachse 104 zueinander verdreht angeordnet, so daß wie in Fig. 11 in Schlauchachse 104 gesehen, eine sternförmige Anordnung der Aufnahmeeinrichtungen 101 gebildet ist.

Zusätzlich können die Aufnahmeeinrichtungen 101 einer oder mehrerer Aufnahmeebenen 105 unterschiedlich weit von der Schlauchachse 104 beabstandet sein. Von den Faserbandrollen 103 werden Faserbänder 106 an einen Folienschlauch 107 herangeführt. Der Folienschlauch 107 ist bei dieser Vorrichtung durch Druckluft oder Wasser zu einer zylindrischen Form aufgeweitet.

Die Faserbänder 106 sind mit einem Harz getränkt, das bevorzugt UV-aushärtbar ist. Die Faserbandrollen 103 können schon mit Harz vorgetränkt sein oder die Faserbänder 106 werden beim Abrollen noch durch eine spezielle, nicht dargestellte Beharzungsvorrichtung geführt. Das sternförmige Heranführen der Faserbänder 106 an den Folienschlauch 107 wird durch nicht dargestellte Führungseinrichtungen, bevorzugt in Form von Andrückrollen, bewirkt.

Dabei bilden, wie in Fig. 11 zu sehen ist, jeweils zwei Faserbänder 106 eine Schicht eines herzustellenden Auskleidungsschlauches 108. Dabei weisen die einander zugeordneten Längskanten 109 beim auf den Schlauch 107 angeordneten Zustand einen Abstand zueinander auf, so daß eine Naht 110 entsteht. Denkbar wäre jedoch auch, daß sich die Längskanten 109 der Faserbänder 106 überlappen. Eine nachfolgende Lage wird so angeordnet, daß die oberen Faserbänder 106 eine darunterliegende Naht 110 oder Überlappung vollständig überdecken. Diese Verfahrensweise wird vollständig bis zur letzten Lage beibehalten. Die letzte Lage kann wahlweise mit Verstärkungsstreifen versehen sein, die über Nähte 110 oder Überlappungen gelegt werden, oder es kann bei der letzten Lage gänzlich auf eine Verstärkung verzichtet werden, weil hierdurch kein nennenswerter Festigkeitsverlust zu erwarten ist.

In Fig. 11 ist auch deutlich zu sehen, daß die Nähte 110 oder Überlappungen der Längskanten 109 gleichmäßig versetzt zueinander am Umfang des Folienschlauches 107 angeordnet sind. Hierdurch sind verbesserte Festigkeitseigenschaften erreichbar.

Innerhalb einer Aufnahmeebene 105 können Aufnahmeeinrichtungen 101 angeordnet sein, die Faserbänder 106 für unterschiedliche Schichten bereitstellen. Es ist jedoch auch möglich, schmalere Faserbänder 106 einzusetzen, so daß eine Lage aus mehr als zwei Faserbändern 106 zusammengesetzt wird.

Wenn dann der Auskleidungsschlauch 108 durch entsprechende Anzahl von Lagen und entsprechend dicker Faserbänder 106 seine gewünschte Wandstärke erreicht hat, kann zusätzlich noch, wie in Fig. 10 und 11 nicht dargestellt ist, ein äußerer Folienschlauch auf den Auskleidungsschlauch 108 aufgebracht werden.

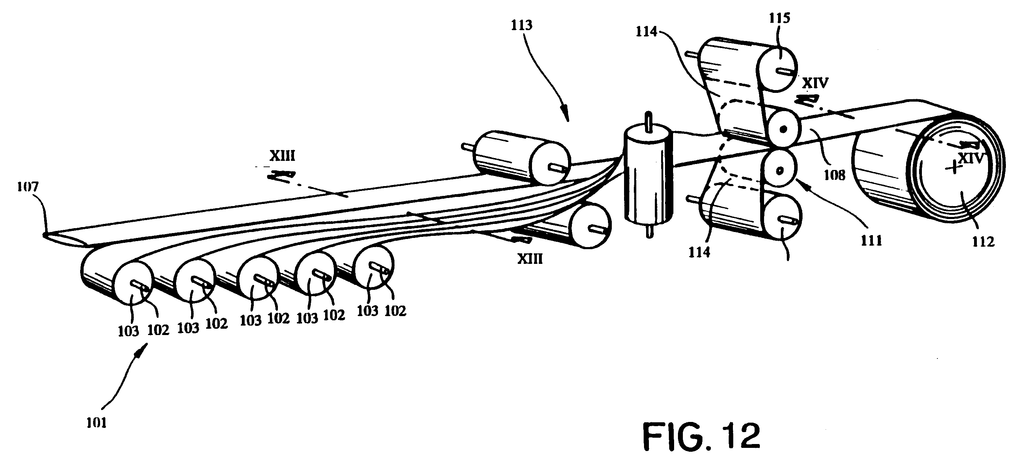

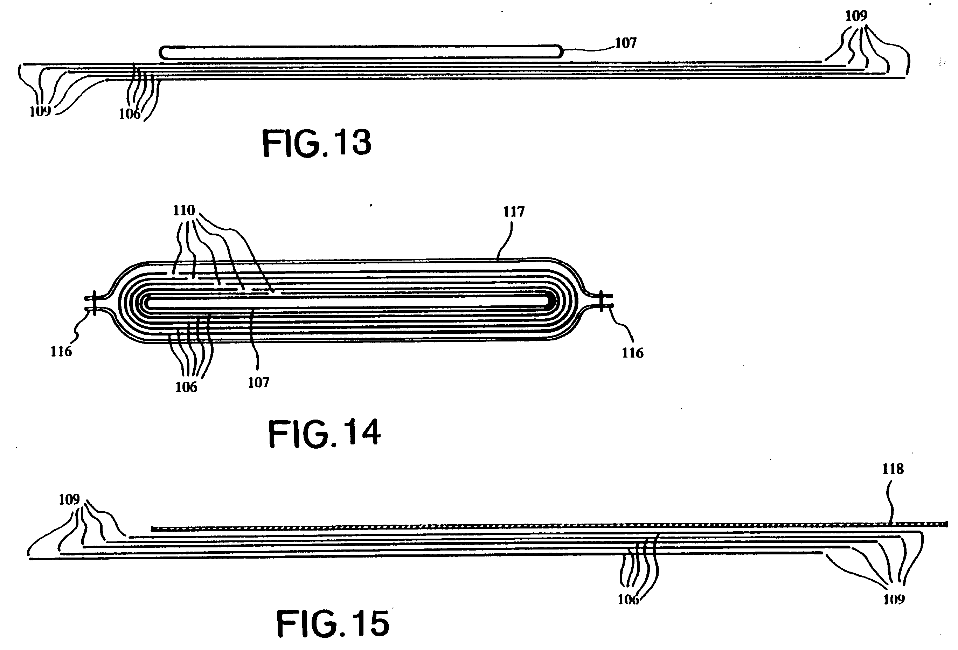

Anschließend wird der fertige Auskleidungsschlauch 108 durch ein Walzenpaar 111 durchgeleitet, die ihn zusammendrücken, damit er von einer Abnahmevorrichtung 112, bevorzugt in Form einer Wickeltrommel, aufgewickelt werden kann. Es ist auch denkbar, den Auskleidungsschlauch 108 direkt zur Weiterverarbeitung weiterzuleiten.
Im folgenden wird anhand der Figuren 12 und 13 eine weitere Ausführungsform einer Vorrichtung zum Herstellen eines Auskleidungsschlauches näher erläutert. Im folgenden wird nur auf die Unterschiede dieser Vorrichtung zur Vorangegangenen eingegangen. Ähnliche oder gleiche Bauteile und Bestandteile sind weiterhin durch die gleichen Bezugsziffern gekennzeichnet.

Bei dieser Vorrichtung wird der innere Folienschlauch 107 der Vorrichtung in flacher, nicht aufgeweiteter Form zugeführt. Unterhalb des Folienschlauches 107 sind mehrere Aufnahmeeinrichtungen 101 in Reihe hintereinander angeordnet. Die Aufnahmeachsen 102 der Aufnahmeeinrichtungen 101 sind dabei im wesentlichen parallel zueinander ausgerichtet. Jedoch weisen die Aufnahmeeinrichtungen 101 einen seitlichen Versatz zueinander auf, so daß Faserbandrollen 103, die auf den Aufnahmeachsen 102 drehbar gehaltert sind, mit ihren Längskanten 109 versetzt zueinander abgewickelt werden. Dabei werden die Faserbänder 106 so geführt, daß sie übereinander angeordnet sind. Dies ist insbesondere deutlich in Fig. 13 zu erkennen. Durch Führungseinrichtungen 113 in Form von Andrückrollen werden dann die gestuften Faserbänder 106 um den flachen, inneren Folienschlauch 107 herumgelegt. Dabei kommen die gestuften Längskanten 109 der einen Seite mit den gestuften Längskanten 109 der anderen Seite der Folienbänder 106 paßgenau zur Anlage. Hierbei ist es auch weiterhin gewährleistet, daß die dabei entstehenden Nähte 110 und/oder Überlappungen jeweils von dem darüberliegenden Faserband 106 abgedeckt werden.

Anschließend werden der Folienschlauch 107 und die Faserbänder 106 durch ein Walzenpaar 111 geführt, das gleichzeitig ein oberes und unteres Folienband 114 an den Auskleidungsschlauch andrückt. Das untere und obere Folienband 114 werden jeweils von einer Folienbandrolle 115 abgewickelt. Bevorzugt ist dabei, wie in Fig. 14 zu sehen, die Breite des flachen Auskleidungsschlauches 108 geringer als die Breite der Folienbänder 114, so daß die seitlich überstehenden Ränder 116 die Folienbänder durch eine dem Walzenpaar zugeordnete, in den Figuren nicht dargestellte Verbindungseinrichtung miteinander, bevorzugt durch Schweißen oder Kleben, verbunden sind.

Der Gesamtaufbau des Auskleidungsschlauches 108 an dieser Stelle ist in Fig. 14 deutlich zu erkennen. Hinzuzufügen ist hier lediglich noch, daß die Stufung der Nähte 110 deutlicher ausgeprägt sein kann als in Fig. 14 zu sehen.

Anschließend wird der Auskleidungsschlauch 108 von einer Abnahmevorrichtung 112 aufgewickelt.

Es sei an dieser Stelle noch erwähnt, daß der innere Folienschlauch 107 auch auf ähnliche Weise hergestellt werden kann, wie der äußere Folienschlauch 117 aus Fig. 14.

In Fig. 15 ist eine weitere Schichtung dargestellt, die bei der Vorrichtung gemäß Fig. 12 Anwendung finden kann. Dabei ist zur Bildung eines inneren Folienschlauches 107 ein inneres Folienband 118 stufenförmig auf das Faserband geschichtet, so daß beim Umlegen von innerem Folienband 118 und Faserbändern 106 gleichzeitig der innere Folienschlauch 107 gebildet wird.

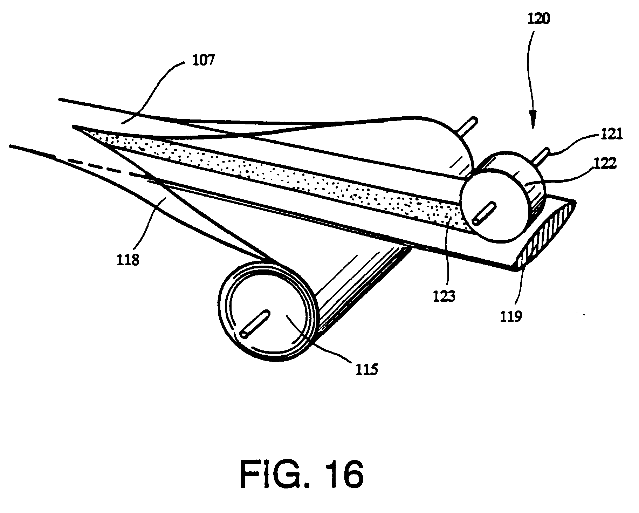

In Fig. 16 ist dargestellt, wie ein solches inneres Folienband 118 von einer Folienbandrolle 115 abgewickelt und mittels nicht dargestellter Führungseinrichtungen, bevorzugt Andrückrollen, um eine flache Führungszunge 119 herumgelegt wird, deren Umfangslänge im wesentlichen der Breite des inneren Folienbandes und somit des gewünschten Innenumfanges des Auskleidungsschlauches 108 entspricht. Dabei werden die Folienränder im wesentlichen paßgenau aneinandergelegt, damit diese von einer Verbindungseinrichtung 120 miteinander verbunden werden können. Die Verbindung kann entweder durch Schweißen oder Kleben erfolgen. In Fig. 16 ist als Verbindungseinrichtung 120 eine Achse 121 mit drehbar aufgesteckter Klebebandrolle vorgesehen. Dabei wird ein Klebeband 123 mit der Klebefläche nach oben auf der Führungszunge 119 so abgerollt, daß die miteinander zugeordneten Ränder des inneren Folienbandes 118 auf die Klebeseite des Klebebandes 123 durch die Führungseinrichtung im wesentlichen paßgenau aufgedrückt werden. Hierdurch wird kontinuierlich ein innerer Folienschlauch 107 hergestellt. Ein äußerer Folienschlauch kann in ähnlicher Weise hergestellt werden.

Bei einer nicht dargestellten Ausführungsform kann die Führungszunge 119 mit einer Einrichtung zum Erzeugen einer im wesentlichen zur Abzugsgeschwindigkeit des Schlauches synchronen Vorschubbewegung in Richtung der Schlauchlängserstreckung versehen sein. Eine konstruktive Ausgestaltung kann ähnlich der bei den Wickelfingern 28 verwendeten Riemenantriebe (siehe hierzu Figuren 6 bis 9) erfolgen.

Insbesondere wird weiterhin auf eine Verfahrensvariante verwiesen, bei der der innere Folienschlauch aufgeblasen ist, wenn das Faserband auf den Folienschlauch abgewickelt wird. Der Folienschlauch kann dabei exzentrisch um einen Gegenhalter, der in seinem Innern angeordnet ist, geführt sein. Durch dieses Verfahren können ebenfalls beliebige Schlauchdurchmesser auf ein und derselben Anlage hergestellt werden. Weiterhin können bei diesem Verfahren sämtliche auch nicht gewickelte Folienschläuche verwendet werden. Der weitere Vorgang wird entsprechend einer voran beschriebenen Ausführungsform gewählt.

Die vorliegende Erfindung ermöglicht, einen Auskleidungsschlauch auf kostengünstige Weise mit geringem apparativen Aufbau und mit relativ hoher Produktionsgeschwindigkeit herzustellen. Das Faserband besteht bevorzugt aus einem Glasfaser-Rovinggewebe, -Gelege, und/oder -Gewirke, und/oder Glasfaser-Matten und/oder -Vliese, allein oder in Kombination untereinander. Das Faserband wird bevorzugt aber nicht zwingend mit einem UV-härtbaren Harz, das vorzugsweise im sichtbaren und ungefährlichen UV-A-Bereich mit und ohne zusätzliche radikalische Initiatoren aushärtbar ist, getränkt. Diese Materialien haben sich bei Auskleidungsschläuchen bisher bestens bewährt. Des weiteren kann auf die Außenseite des Schlauches eine nach innen und/oder außen im wesentlichen vollständig lichtreflektierende Schicht aufgebracht sein.

Ein nach den oben beschriebenen Verfahren hergestellter Auskleidungsschlauch kann z.B. zu Kanalsanierungsarbeiten in ein defektes Abflußrohr eingezogen, aufgeweitet und ausgehärtet werden. Möglich ist aber auch eine Anwendung als Kanalrohrersatz, indem der Schlauch aufgeweitet und ausgehärtet direkt als Rohrleitung, z.B. Wasserleitung, Pipeline oder Abflußrohr verlegt werden kann.

## Patentansprüche

1. Verfahren zum Herstellen eines rohrförmigen Auskleidungsschlauches (20, 108), insbesondere zum Einsatz bei Kanalsanierungsarbeiten, bei dem mindestens ein Faserband (25, 106) zu einem aushärtbaren, harzgetränkten Schlauch geformt wird, wobei die Innenseite des so entstandenen Auskleidungsschlauches (20, 108) mit einem Folienschlauch (26, 107) versehen wird, auf den das Faserband (25, 106) abgewickelt wird, **dadurch gekennzeichnet**, daß der Wickelvorgang auf einem Wickeldorn (1) aus mindestens zwei im wesentlichen parallel zueinander angeordneten Wickelfingern (28) erfolgt, deren Abstand einzeln oder gemeinsam radial zur Wickeldornachse (4) zum Verändern des Wickelumfangs des Wickeldorns (1) veränderbar ist.

2. Verfahren nach **Anspruch 1, dadurch gekennzeichnet,** daß ein äußerer Folienschlauch (117) um die zu einem Schlauch geformten Faserbänder (25, 106) angeordnet wird.

3. Verfahren nach Anspruch 1 oder 2, **dadurch gekennzeichnet**, daß auf das zu einem Schlauch geformte Faserband (25, 106) der äußere Folienschlauch durch schraubenförmiges Umwickeln mit einem zweiten Folienband (27) aufgebracht wird, wobei sich die einander zugeordneten Seitenkanten des zweiten Folienbandes (27) bevorzugt überlappen.

4. Verfahren nach Anspruch 1 oder 2, **dadurch gekennzeichnet**, daß der äußere Folienschlauch (117) aus mindestens einem Folienband (14, 18) hergestellt wird, welches in Schlauchlängsrichtung von einer Folienbandrolle (15) abgezogen und gleichzeitig zu einem Schlauch geformt wird, wobei die Längsränder des Folienbandes (14, 18) miteinander verschweißt oder verklebt werden.

5. Verfahren nach einem der Ansprüche 1 bis 4, **dadurch gekennzeichnet**, daß der Wickelvorgang des Faserbandes (25, 106) und des Folienbandes (24) bzw. der Folienbänder (24, 27, 114, 118) im wesentlichen gleichzeitig ausgeführt wird.

6. Verfahren nach einem der Ansprüche 1 bis 5, **dadurch gekennzeichnet**, daß die sich einander überlappenden Seitenkanten des ersten und/oder zweiten Folienbandes (24, 27, 114, 118), bevorzugt durch Verschweißen oder Verkleben, abgedichtet miteinander verbunden werden.

7. Verfahren nach einem der Ansprüche 1 bis 6, **dadurch gekennzeichnet**, daß die Ränder des inneren und/oder äußeren Folienschlauches (26, 107, 117) durch ein mitlaufendes Klebeband (123) miteinander verbunden werden.

8. Verfahren nach einem der Ansprüche 1 bis 7, **dadurch gekennzeichnet**, daß das Faserband (25) bzw. die Faserbänder schraubenförmig um den Folienschlauch (26) in eine Schlauchform gewickelt wird bzw. werden, wobei sich die einander zugewandten Seitenkanten der Faserbänder (25) überlappen.

9. Verfahren nach Anspruch 8, **dadurch gekennzeichnet**, daß das Faserband (25) oder die Faserbänder mit gegengerichteter Steigung zu der Steigung des ersten und/oder zweiten Folienbandes (24, 27) gewickelt sind.

10. Verfahren nach Anspruch 8 oder 9, **dadurch gekennzeichnet**, daß mindestens zwei Faserbänder (25) kreuzweise zueinander gewickelt werden.

11. Verfahren nach einem der Ansprüche 1 bis 7, **dadurch gekennzeichnet**, daß die Faserbänder (106) mit ihrer Längskante(109) im wesentlichen in Schlauchlängsrichtung ausgerichtet auf die schlauchförmige Schutzfolie abgewickelt und von Führungseinrichtungen (113) zu einer Schlauchform um die Schutzfolie herumgeführt werden, wobei die Nähte (110) und/oder Überlappungen zweier Längskanten (109) eines Faserbandes (106) oder zweier Faserbänder (106) von einem darüber angeordneten Faserband (106) abgedeckt werden.

12. Verfahren nach Anspruch 11, **dadurch gekennzeichnet**, daß die Faserbänder (106) so versetzt zueinander abgewickelt werden, daß die Nähte (110) und/oder Überlappungen der Längskanten (109) gleichmäßig versetzt zueinander am Umfang angeordnet werden.

13. Verfahren nach Anspruch 11 oder 12, **dadurch gekennzeichnet**, daß die Schutzfolie zu einem inneren Folienschlauch (107) geformt und der Folienschlauch (107) flachgedrückt wird, wobei die übereinanderliegenden, seitlich zueinander versetzten Faserbänder (106) mit der Führungseinrichtung (113) an den Folienschlauch (107) gemeinsam herangeführt und um diesen gemeinsam herumgelegt werden, so daß die stufenförmig zueinander angeordneten Längskanten (109) der einen Seite im wesentlichen paßgenau mit dem stufenförmig zueinander angeordneten Längskanten (109) der anderen Seite zusammengefügt werden.

14. Verfahren nach einem der Ansprüche 1 bis 13, **dadurch gekennzeichnet**, daß das Faserband (25, 106) mit Harz getränkt wird bevor es zu dem Schlauch geformt wird.

15. Verfahren nach einem der Ansprüche 1 bis 14, **dadurch gekennzeichnet**, daß in den inneren Folienschlauch (26, 107) Luft eingeblasen wird, so daß das Faserband (25, 106) auf den aufgeblasenen Teil des Folienschlauches (26, 107) abgewickelt wird.

16. Verfahren nach einem der Ansprüche 1 bis 15, **dadurch gekennzeichnet**, daß der fertiggewickelte Auskleidungsschlauch (20, 108) von einer Abnahmevorrichtung (21, 112) abgeführt und aufgerollt wird.

17. Verfahren nach einem der Ansprüche 1 bis 16, **dadurch gekennzeichnet**, daß als Faserband (25, 106) ein Glasfaser-Rovinggewebe, -Gelege, und/oder -Gewirke, und/oder Glasfaser-Matten und/oder -Vliese allein oder in Kombination untereinander verwendet wird und/oder werden.

18. Verfahren nach einem der Ansprüche 1 bis 17, **dadurch gekennzeichnet**, daß auf die Außenseite des Schlauches eine nach innen und/oder außen im wesentlichen vollständig lichtreflektierende Schicht aufgebracht wird.

19. Vorrichtung zur Durchführung des Verfahrens nach einem der Ansprüche 1 bis 18, mit einem länglichen Wickeldorn (1) und mindestens zwei im Abstand drehbar um die Wickeldornachse (4) angeordneten Aufnahmevorrichtungen (5, 9, 15) zur Aufnahme von Faserbandrollen (6, 10, 8), wobei die Faserbandrollen (6, 10, 18) jeweils um ihre Längsachse drehbar in der jeweiligen Aufnahmeeinrichtung (5, 9, 15) derart gehaltert sind, daß die Faserbänder durch eine Drehbewegung der Aufnahmeeinrichtung um die Wickeldornachse und gleichzeitiger Drehung der Faserbandrollen (6, 10, 18) um die eigene Achse auf den Wickeldorn (1) bzw. um die Wickeldornachse (4) wickelbar sind, und wobei eine Abnahmevorrichtung (21) den gewickelten Auskleidungsschlauch (20) von dem Wickeldorn (1) im wesentlichen in Achsrichtung des Wickeldorns (1) abführt,
**dadurch gekennzeichnet,**
daß der Wickeldorn (1) aus mindestens zwei im wesentlichen parallel zueinander angeordneten Wickelfingern (28) gebildet ist, deren Abstand einzeln oder gemeinsam radial zur Wickeldornachse (4) zum Verändern des Wickelumfangs des Wickeldorns (1) änderbar ist.

20. Vorrichtung nach Anspruch 19, **dadurch gekennzeichnet**, daß die Wickelfinger (28) mit einer Einrichtung, z.B. einem Riementrieb, zum Erzeugen einer zur Abzugsgeschwindigkeit des Schlauches synchronen Vorschubbewegung in Richtung der Schlauchlängserstreckung versehen sind, damit ein im wesentlichen reibungsfreies Abziehen des inneren Folienschlauches (26) von den Wickelfingern (28) erfolgt.

21. Vorrichtung nach Anspruch 19 oder 20, **dadurch gekennzeichnet**, daß die Aufnahmeeinrichtungen (5, 9, 15) jeweils eine winkelverstellbare Aufnahmeachse (7, 12, 17) zur drehbaren Aufnahme der Faserrollen (6, 10, 18) aufweisen, wobei die Winkelstellung der jeweiligen Aufnahmeachse (7, 12, 17) der Wickelsteigung des Faserbandes (24, 25, 27) angepaßt ist.

22. Vorrichtung nach einem der Ansprüche 19 bis 21, **dadurch gekennzeichnet**, daß die Aufnahmeeinrichtungen (5, 9, 15) jeweils ein um den Wickeldorn (1) angeordnetes, reifenförmiges Gestell (8, 11, 16) aufweisen, das drehbar um den Wickeldorn (1) gelagert ist, wobei die Gestelle (8, 11, 16) von einer Antriebseinheit jeweils mit unterschiedlichen Drehzahlen derart antreibbar sind, daß bei unterschiedlicher Wickelsteigung von Faser- bzw. Folienbändern (24, 25, 27) die Wickelgeschwindigkeit in Achsrichtung des Wickeldorns (1) bei allen Faser- bzw. Folienbändern (24, 25, 27) im wesentlichen gleich ist.

23. Vorrichtung nach einem der Ansprüche 19 bis 22, **dadurch gekennzeichnet**, daß der Wickeldorn (1) an seinem Abnahmeende ein Blasmundstück (2) aufweist, durch das Luft in den Folienschlauch (26) einblasbar ist.

24. Vorrichtung nach einem der Ansprüche 19 bis 23, **dadurch gekennzeichnet**, daß die Abnahmeeinrichtung (21) den Auskleidungsschlauch (20) zusammendrückende Abnahmewalzen (22) aufweist, wobei der Folienschlauch (26) zwischen den Abnahmewalzen (22) und dem Blasmundstück (2) einen mit Luft gefüllten Bereich aufweist.

25. Vorrichtung nach einem der Ansprüche 19 bis 24, **dadurch gekennzeichnet**, daß die Aufnahmeeinrichtung (5) für die erste Folienbandrolle (24) zum Wickeln des Folienschlauches (26) um den Wickeldorn (1) angeordnet und die Aufnahmeeinrichtung (9, 15) für die Faserbandrolle (10) bzw. für die zweite Folienbandrolle (18) zum Wickeln eines äußeren Folienschlauchs im wesentlichen um das Blasmundstück (2) und/oder den mit Luft gefüllten Bereich des Folienschlauchs (26) angeordnet sind.

26. Vorrichtung nach einem der Ansprüche 19 bis 25, **dadurch gekennzeichnet**, daß jeweils der Aufnahmeeinrichtung (5, 15) für das Folienband (24, 27) eine Versiegelungseinrichtung zum Abdichten, bevorzugt durch Verschweißen oder Verkleben, der einander überlappenden Seitenkanten des Folienbandes (24, 27) zugeordnet ist.

## Claims

1. A method of producing a tubular lining hose (20, 108), in particular for use in sewer reconstruction work, comprising the steps of forming at least one fibrous strip (25, 106) into a curable, resin-impregnated hose, the inner side of the resultant lining hose (20, 108) being provided with a foil hose (26, 107) onto which the fibrous strip (25, 106) is wound, **characterized in that** the winding operation takes place on a winding mandrel (1) consisting of at least two winding fingers (28), which are arranged essentially parallel to each other and the distance of which can be adjusted individually or jointly in a direction radial to the axis (4) of the winding mandrel (1) so as to vary the winding circumference of said winding mandrel (1).

2. A method according to claim 1, **characterized in that** an outer foil hose (117) is arranged around the fibrous strips (25, 106) formed into a hose.

3. A method according to claim 1 or 2, **characterized in that** the fibrous strip (25, 106) formed into a hose has applied thereto the outer foil hose by helically winding a second foil strip (27) onto said fibrous strip (25, 106), the associated lateral edges of said second foil strip (27) being preferably arranged such that they overlap.

4. A method according to claim 1 to 2, **characterized in that** the outer foil hose (117) is made from at least one foil strip (14, 18), which is unwound from a foil-strip roll (15) in the longitudinal direction of the hose and simultaneously formed into a hose, the longitudinal edges of the foil strip (14, 18) being interconnected by welding or by means of an adhesive.

5. A method according to one of the claims 1 to 4, **characterized in that** the winding operations of the fibrous strip (25, 106) and of the foil strip (24) or of the foil strips (24, 27, 114, 118) are carried out essentially simultaneously.

6. A method according to one of the claims 1 to 5, **characterized in that** the overlapping lateral edges of the first and/or second foil strip(s) (24, 27, 114, 118) are sealingly interconnected preferably by welding or by means of an adhesive.

7. A method according to one of the claims 1 to 6, **characterized in that** the edges of the inner and/or outer foil hose (26, 107, 117) are interconnected by an adhesive tape (123) which is unwound in the same direction.

8. A method according to one of the claims 1 to 7, **characterized in that** the fibrous strip (25) or the fibrous strips is/are helically wound around the foil hose (26) such that a hose shape is obtained, the lateral edges of the fibrous strips (25), which face each other, being arranged in an overlapping mode of arrangement.

9. A method according to claim 8, **characterized in that** the fibrous strip (25) or the fibrous strips is/are wound such that the lead obtained is opposite to the lead of the first and/or second foil strip(s) (24, 27).

10. A method according to claim 8 or 9, **characterized in that** at least two fibrous strips (25) are wound crosswise with respect to one another.

11. A method according to one of the claims 1 to 7, **characterized in that** the fibrous strips (106) are wound onto the hoselike protective foil such that their longitudinal edges (109) are oriented essentially in the longitudinal direction of the hose, said fibrous strips (106) being guided with the aid of guide means (113) round the protective foil such that the shape of a hose is obtained, and the seams (110) and/or overlaps of two longitudinal edges (109) of a fibrous strip (106) or of two fibrous strips (106) being covered by a superimposed fibrous strip (106).

12. A method according to claim 11, **characterized in that** the fibrous strips (106) are unwound in a condition in which they are displaced relative to one another in such a way that the seams (110) and/or the overlaps of the longitudinal edges (109) will be arranged on the circumference in a mode of arrangement in which they are uniformly displaced relative to one another.

13. A method according to claim 11 or 12, **characterized in that** the protective foil is formed into an inner foil hose (107) and that said foil hose (107) is flattened, the superimposed fibrous strips (106), which are laterally displaced relative to one another, being jointly led up to the foil hose (107) with the aid of the guide means (113) and jointly put round said foil hose (107) so that the longitudinal edges (109) of one side, which are arranged in steps relative to one another, are joined in an essentially precisely fitting connection with the longitudinal edges (109) of the other side, which are arranged in steps relative to one another.

14. A method according to one of the claims 1 to 13, **characterized in that** the fibrous strip (25, 106) is impregnated with resin prior to being formed into a hose.

15. A method according to one of the claims 1 to 14, **characterized in that** air is blown into the inner foil hose (26, 107) so that the fibrous strip (25, 106) is wound onto the inflated part of the foil hose (26, 107).

16. A method according to one of the claims 1 to 15, **characterized in that** the ready-wound lining hose (20, 108) is removed by a removing device (21, 112) and wound up.

17. A method according to one of the claims 1 to 16, **characterized in that** a woven glass roving fabric, a glass-fibre woven fabric and/or a glass-fibre knitted fabric and/or glass-fibre mats and/or non-woven glass-fibre fabrics, alone or in combination with one another, is and/or are used as a fibrous strip (25, 106).

18. A method according to one of the claims 1 to 17, **characterized in that** the outer side of the hose has applied thereto an inwardly and/or outwardly essentially fully light-reflecting layer.

19. An apparatus for carrying out the method according to one of the claims 1 to 18, comprising an elongate winding mandrel (1) and at least two reception means (5, 9, 15), which are arranged in spaced relationship with the axis (4) of the winding mandrel (1) such that they are adapted to be rotated about said axis (4) and which are used for receiving thereon fibrous-strip rolls (6, 10, 18), said fibrous-strip rolls (6, 10, 18) being adapted to be rotated about their longitudinal axis and supported in the respective reception means (5, 9, 15) in such a way that the fibrous strips are adapted to be wound on the winding mandrel (1) and the winding mandrel axis (4), respectively, by a rotary movement of the reception means about the winding mandrel axis and by simultaneous rotation of the fibrous-strip rolls (6, 10, 18) about their own axis, and a removing device (21) removing the wound lining hose (20) from the winding mandrel (1) essentially in the axial direction of said winding mandrel (1), **characterized in that** the winding mandrel (1) consists of at least two winding fingers (28), which are arranged essentially parallel to each other and the distance of which can be adjusted individually or jointly in a direction radial to the axis (4) of the winding mandrel (1) so as to vary the winding circumference of said winding mandrel (1).

20. An apparatus according to claim 19, **characterized in that** the winding fingers (28) are provided with a means, e.g. a belt drive, for producing an advance movement in the longitudinal direction of the hose so that an essentially frictionless removal of the inner foil hose (26) from the winding fingers (28) takes place, said advance movement being synchronous with the hose removal speed.

21. An apparatus according to claim 19 or 20, **characterized in that** the reception means (5, 9, 15) are each provided with an angularly adjustable reception axle (7, 12, 17) for rotatably receiving thereon the fibrous-strip rolls (6, 10, 18), the angular position of the respective reception axle (7, 12, 17) being adapted to the winding lead of the fibrous strip (24, 25, 27).

22. An apparatus according to one of the claims 19 to 21, **characterized in that** the reception means (5, 9, 15) are each provided with a hooplike frame (8, 11, 16), which is arranged such that it extends around the winding mandrel (1) and which is supported such that it is adapted to be rotated about said winding mandrel (1), said frames (8, 11, 16) being adapted to be driven by a drive unit at different speeds in such a way that, in the case of different winding leads of the fibrous and foil strips (24, 25, 27), the winding speed in the axial direction of the winding mandrel (1) is essentially the same for all fibrous and foil strips (24, 25, 27).

23. An apparatus according to one of the claims 19 to 22, **characterized in that** the winding mandrel (1) is provided with a blow nozzle (2), which is arranged at the removing end thereof and through which air can be blown into the foil hose (26).

24. An apparatus according to one of the claims 19 to 23, **characterized in that** the removing device (21) comprises removing rollers (22) which squeeze the lining hose (20) together, said foil hose (26) having an area filled with air which is located between the removing rollers (22) and the blow nozzle (2).

25. An apparatus according to one of the claims 19 to 24, **characterized in that** the reception means (5) for the first foil-strip roll (24) for winding the foil hose (26) is arranged round the winding mandrel (1) and that the reception means (9, 15) for the fibrous-strip roll (10) and for the second foil-strip roll (18) for winding an outer foil hose are arranged essentially around the blow nozzle (2) and/or the air-filled area of the foil hose (26).

26. An apparatus according to one of the claims 19 to 25, **characterized in that** the reception means (5, 15) for the foil strip (24, 27) each have associated therewith a sealing means for sealing, preferably by welding or by means of an adhesive, the overlapping lateral edges of the foil strip (24, 27).

## Revendications

1. Procédé de fabrication d'une gaine de chemisage (20, 108) tubulaire, destinée notamment à être utilisée lors de travaux d'assainissement de canalisations, procédé dans lequel au moins une bande de fibres (25, 106) est formée pour obtenir une gaine imprégnée de résine durcissable, le côté intérieur de la gaine de chemisage (20, 108) ainsi obtenue étant pourvu d'une gaine en feuille (26, 107) sur laquelle la bande de fibres (25, 106) est déroulée, **caractérisé** en ce que l'opération d'enroulement s'effectue sur un mandrin d'enroulement (1) formé d'au moins deux queues d'enroulement (28) qui sont disposées sensiblement parallèlement l'une à l'autre et dont l'écartement radial par rapport à l'axe (4) du mandrin d'enroulement peut être modifié individuellement ou conjointement en vue de faire varier le volume d'enroulement du mandrin d'enroulement (1).

2. Procédé selon la revendication 1, **caractérisé** en ce qu'une gaine en feuille (117) extérieure est disposée autour des bandes de fibres (25, 106) formées pour obtenir une gaine.

3. Procédé selon la revendication 1 ou 2, **caractérisé** en ce que la gaine en feuille extérieure est appliquée sur la bande de fibres (25, 106) formée pour obtenir une gaine, par enroulement hélicoïdal d'une deuxième bande de feuille (27), les bords latéraux mutuellement associés de la deuxième bande de feuille (27) se chevauchant.

4. Procédé selon la revendication 1 ou 2, **caractérisé** en ce que la gaine en feuille (117) extérieure est fabriquée à partir d'au moins une bande de feuille (14, 18) qui est déroulée d'une bobine (15) de bande de feuille dans la direction longitudinale de la gaine et est simultanément formée pour obtenir une gaine, les bords longitudinaux de la bande de feuille (14, 18) étant soudés ou collés entre eux.

5. Procédé selon l'une des revendications 1 à 4, **caractérisé** en ce que les opérations d'enroulement de la bande de fibres (25, 106) et de la bande de feuille (24) ou des bandes de feuille (24, 27, 114, 118) sont sensiblement simultanées.

6. Procédé selon l'une des revendications 1 à 5, **caractérisé** en ce que les bords latéraux qui se chevauchent de la première et/ou de la deuxième bande de feuille (24, 27, 114, 118) sont reliés entre eux de manière étanche, de préférence par soudage ou collage.

7. Procédé selon l'une des revendications 1 à 6, **caractérisé** en ce que les bords de la gaine en feuille (26, 107, 117) intérieure et/ou extérieure sont reliés entre eux par une bande adhésive (123) déplacée avec ladite gaine.

8. Procédé selon l'une des revendications 1 à 7, **caractérisé** en ce que la bande de fibres (25) ou les bandes de fibres est (sont) enroulée(s) de manière hélicoïdale autour de la gaine en feuille (26), les bords latéraux tournés les uns vers les autres des bandes de fibres (25) se chevauchant.

9. Procédé selon la revendication 8, **caractérisé** en ce que la bande de fibres (25) ou les bandes de fibres est (sont) enroulée(s) avec un pas dirigé à l'inverse du pas de la première et/ou de la deuxième bande de feuille (24, 27).

10. Procédé selon la revendication 8 ou 9, **caractérisé** en ce qu'au moins deux bandes de fibres (25) sont enroulées en se croisant entre elles.

11. Procédé selon l'une des revendications 1 à 7, **caractérisé** en ce que les bandes de fibres (106) sont déroulées sur la feuille protectrice en forme de gaine avec leur bord longitudinal (109) dirigé sensiblement dans la direction longitudinale de la gaine et sont placées par des dispositifs de guidage (113) autour de la feuille protectrice pour obtenir une forme de gaine, les joints (110) et/ou chevauchements de deux bords longitudinaux (109) d'une bande de fibres (106) ou de deux bandes de fibres (106) étant recouverts par une bande de fibres (106) disposée dessus.

12. Procédé selon la revendication 11, **caractérisé** en ce que les bandes de fibres (106) sont déroulées en étant mutuellement décalées de telle sorte que les joints (110) et/ou chevauchements des bords longitudinaux (109) sont disposés sur le pourtour en étant décalés régulièrement les uns par rapport aux autres.

13. Procédé selon la revendication 11 ou 12, **caractérisé** en ce que la feuille protectrice est formée pour obtenir une gaine en feuille (107) intérieure et la gaine en feuille (107) est aplatie, les bandes de fibres (106) superposées et mutuellement décalées latéralement étant approchées ensemble de la gaine en feuille (107) par le dispositif de guidage (113) et placées ensemble autour de celle-ci de sorte que les bords longitudinaux (109) étagés les uns par rapport aux autres de l'un des côtés sont assemblés de manière sensiblement exacte avec les bords longitudinaux (109) étagés les uns par rapport aux autres de l'autre côté.

14. Procédé selon l'une des revendications 1 à 13, **caractérisé** en ce que la bande de fibres (25, 106) est imprégnée de résine avant d'être formée pour obtenir une gaine.

15. Procédé selon l'une des revendications 1 à 14, **caractérisé** en ce que de l'air est soufflé dans la gaine en feuille (26, 107) intérieure de sorte que la bande de fibres (25, 106) est déroulée sur la partie gonflée de la gaine en feuille (26, 107).

16. Procédé selon l'une des revendications 1 à 15, **caractérisé** en ce que la gaine de chemisage (20, 108) complètement enroulée est évacuée et enroulée par un dispositif de réception (21, 112).

17. Procédé selon l'une des revendications 1 à 16, **caractérisé** en ce que l'on utilise comme bande de fibres (25, 106) un tissu de roving de fibres de verre, un assemblage de fibres de verre et/ou un tricot de fibres de verre et/ou des mats de fibres de verre et/ou des voiles de fibres de verre séparément ou en les combinant entre eux.

18. Procédé selon l'une des revendications 1 à 17, **caractérisé** en ce qu'une couche réfléchissant la lumière sensiblement entièrement vers l'intérieur et/ou l'extérieur est appliquée sur le côté extérieur de la gaine.

19. Dispositif pour la mise en oeuvre du procédé selon l'une des revendications 1 à 18, comportant un mandrin d'enroulement (1) allongé et au moins deux dispositifs récepteurs (5, 9, 15) disposés à distance, avec possibilité de rotation autour de l'axe (4) du mandrin de bobinage, pour la réception de bobines de bande de fibres (6, 10, 18), les bobines de bande de fibres (6, 10, 18) étant supportées respectivement dans le dispositif récepteur (5, 9, 15) avec possibilité de rotation autour de leur axe longitudinal de telle manière que les bandes de fibres peuvent être enroulées sur le mandrin d'enroulement (1) ou autour de l'axe (4) du mandrin d'enroulement par une rotation du dispositif récepteur autour de l'axe du mandrin de bobinage et rotation simultanée des bobines de bande de fibres (6, 10, 18) autour de leur propre axe, et un dispositif de réception (21) évacuant la gaine de chemisage (20) enroulée du mandrin d'enroulement (1) sensiblement dans la direction axiale du mandrin d'enroulement (1), **caractérisé** en ce que le mandrin d'enroulement (1) est formé d'au moins deux queues d'enroulement (28) qui sont disposées sensiblement parallèlement entre elles et dont l'écartement radial par rapport à l'axe (4) du mandrin d'enroulement peut être modifié individuellement ou conjointement pour faire varier le volume d'enroulement du mandrin d'enroulement (1).

20. Dispositif selon la revendication 19, **caractérisé** en ce que les queues d'enroulement (28) sont pourvues d'un dispositif, par exemple d'une transmission à courroie, pour produire un mouvement d'avance synchrone avec la vitesse de tirage de la gaine, dans la direction du prolongement longitudinal de la gaine pour qu'il se produise un tirage pour l'essentiel exempt de frottement de la gaine en feuille (26) intérieure par les queues d'enroulement (28).

21. Dispositif selon la revendication 19 ou 20, **caractérisé** en ce que les dispositifs récepteurs (5, 9, 15) comportent chacun un axe (7, 12, 17) dont l'angle peut être ajusté et qui est destiné à recevoir avec possibilité de rotation les bobines de fibres (6, 10, 18), la position angulaire de l'axe (7, 12, 17) étant adaptée au pas d'enroulement de la bande de fibres (24, 25, 27).

22. Dispositif selon l'une des revendications 19 à 21, **caractérisé** en ce que les dispositifs récepteurs (5, 9, 15) comportent chacun un bâti (8, 11, 16) en forme de cerceau qui est disposé autour du mandrin d'enroulement (1) et est monté tournant autour dudit mandrin d'enroulement (1), les bâtis (8, 11, 16) étant entraînés par une unité d'entraînement chacun à une vitesse différente de telle sorte que lorsque les bandes de fibres et de feuilles (24, 25, 27) ont des pas d'enroulements différents, la vitesse d'enroulement dans la direction axiale du mandrin d'enroulement (1) est sensiblement identique pour toutes les bandes de fibres et de feuilles (24, 25, 27).

23. Dispositif selon l'une des revendications 19 à 22, **caractérisé** en ce que le mandrin d'enroulement (1) comporte à son extrémité de sortie un bec de soufflage (2) par l'intermédiaire duquel de l'air peut être insufflé dans la gaine en feuille (26).

24. Dispositif selon l'une des revendications 19 à 23, **caractérisé** en ce que le dispositif de réception (21) comporte des rouleaux récepteurs (22) comprimant la gaine de chemisage (20), la gaine en feuille (26) présentant une zone remplie d'air entre les rouleaux récepteurs (22) et le bec de soufflage (2).

25. Dispositif selon l'une des revendications 19 à 24, **caractérisé** en ce que le dispositif de réception (5) de la première bobine de bande de feuille (24) est disposé autour du mandrin d'enroulement (1) pour enrouler la gaine en feuille (26) et les dispositifs de réception (9, 15) respectivement de la bobine de bande de fibres (10) et de la seconde bobine de bande de feuille (18) sont disposés, pour l'enroulement d'une gaine en feuille extérieure, sensiblement autour du bec de soufflage (2) et/ou de la zone remplie d'air de la gaine en feuille (26).

26. Dispositif selon l'une des revendications 19 à 25, **caractérisé** en ce qu'un dispositif de scellement, destiné à rendre étanches, de préférence par soudage ou collage, les bords latéraux se chevauchant mutuellement de la bande de feuille (24, 27), est associé à chaque dispositif de réception (5, 15) de la bande de feuille (24, 27).
